(19)

Europäisches
Patentamt

European
Patent Office

Office européen
des brevets

(11) **EP 4 734 095 A1**

(12) **EUROPEAN PATENT APPLICATION**

(43) Date of publication:
**29.04.2026 Bulletin 2026/18**

(21) Application number: **25209727.4**

(22) Date of filing: **20.10.2025**

(51) International Patent Classification (IPC):
*G08G 5/22* (2025.01)    *G01C 21/20* (2006.01)
*G08G 5/26* (2025.01)    *G08G 5/32* (2025.01)
*G08G 5/53* (2025.01)    *G08G 5/55* (2025.01)
*G08G 5/57* (2025.01)    *G08G 5/59* (2025.01)
*G08G 5/72* (2025.01)    *G08G 5/90* (2025.01)

(52) Cooperative Patent Classification (CPC):
G08G 5/22; G01C 21/20; G08G 5/26; G08G 5/32;
G08G 5/53; G08G 5/55; G08G 5/57; G08G 5/59;
G08G 5/727; G08G 5/90

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **22.10.2024  KR 20240145232
23.10.2024  KR 20240145767**

(71) Applicant: **Korea Aerospace Research Institute
Daejeon 34133 (KR)**

(72) Inventors:
• **JEONG, Myeong Sook
34200 Daejeon (KR)**
• **JEON, Dae Keun
34049 Daejeon (KR)**

• **KIM, Hyoun Kyoung
34090 Daejeon (KR)**
• **EUN, Yeon Ju
34127 Daejeon (KR)**
• **OH, Eun Mi
34061 Daejeon (KR)**
• **KIM, So Yeun
34192 Daejeon (KR)**
• **LEE, So Mang
35202 Daejeon (KR)**
• **KIM, Hye Wook
34116 Daejeon (KR)**
• **JANG, Young Hoon
34118 Daejeon (KR)**

(74) Representative: **BCKIP Part mbB
MK1
Landsbergerstraße 98, 3.Stock
80339 München (DE)**

(54) **METHOD AND DEVICE FOR GENERATING THREE-DIMENSIONAL CORRIDORS BASED ON MULTIPLE WAYPOINTS AND MONITORING CONFORMANCE OF TRANSPORTATION MEANS ON A THREE-DIMENSIONAL CORRIDOR USING THE SAME**

(57)    A method and a device for generating three-dimensional corridors based on multiple waypoints and monitoring conformance of transportation means on a three-dimensional corridor using the same are disclosed. The method includes partitioning an air vehicle travel path along which the air vehicle travels into a plurality of partitions; identifying the location of the air vehicle in a volumetric region constituting the partitions; and determining conformance of the air vehicle with respect to the volumetric region according to the identified location.

```
        ( START )
            │
            ▼
┌─────────────────────────────────────┐
│ Partition Air Vehicle Flight Path    │──── S1610
│ Along Which Aircraft Travels Into    │
│ Plurality Of Partitions              │
└─────────────────────────────────────┘
            │
            ▼
┌─────────────────────────────────────┐
│ Identify Location Of Air Vehicle     │──── S1620
│ Within Volumetric Region             │
│ Constituting Partitions              │
└─────────────────────────────────────┘
            │
            ▼
┌─────────────────────────────────────┐
│ Determine Conformance Of Air Vehicle │──── S1630
│ For Volumetric Region Based On       │
│ Identified location                  │
└─────────────────────────────────────┘
            │
            ▼
         ( END )
```

**FIG. 16**

**EP 4 734 095 A1**

**Description**

## TECHNICAL FIELD

The present disclosure relates to an air vehicle corridor and provides a method and a device for generating a multi-waypoint-based three-dimensional corridor, which generate a three-dimensional corridor by considering factors not only a travel path line connecting fixes 1 to N but also an upper altitude limit, a turning radius, and the like.

The present disclosure provides a method and a device for monitoring conformance of a transportation means on a multi-waypoint-based three-dimensional corridor, which accurately determines the spatial conformance and temporal conformance of an air vehicle with respect to a corridor having a volumetric region generated along an air vehicle travel path.

The present disclosure targets the aviation traffic sector as its customer company/organization and considers the aviation traffic field as its market and application domain.

## BACKGROUND

Urban Air Mobility (UAM) may refer to an air transportation system that utilizes eco-friendly electric vertical take-off and landing (eVTOL) air vehicle and vertiports, which may be operated within urban areas, to safely and conveniently transport people or cargo throughout the city.

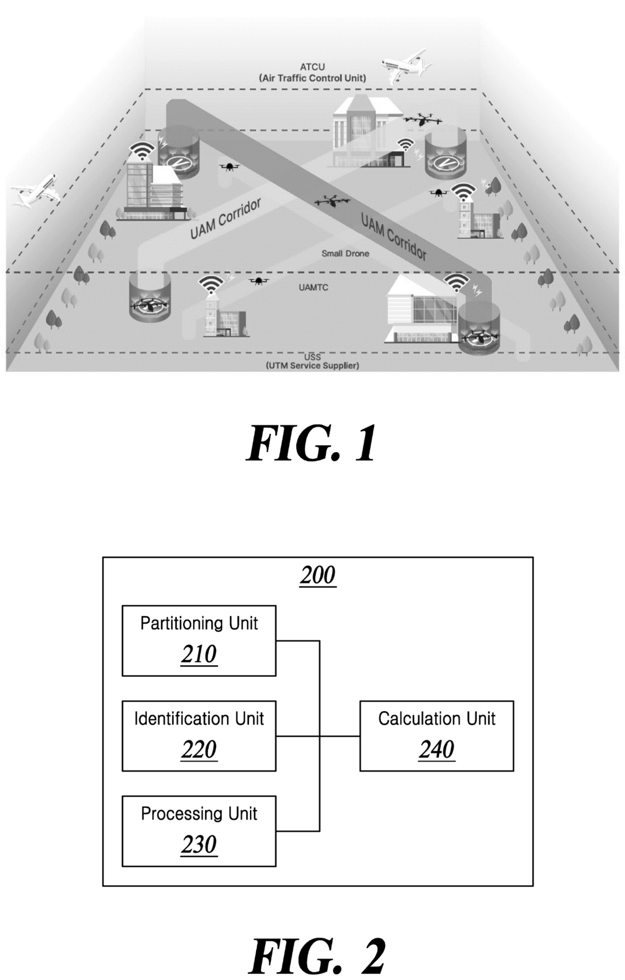

FIG. 1 is a conceptual diagram illustrating the operation of Korean Urban Air Mobility (K-UAM).

As shown in FIG. 1, a UAM flies along a designated UAM corridor.

For UAM traffic management, conformance monitoring technology is required to monitor whether a UAM remains within the designated UAM corridor without deviation.

In UAM traffic management, the UAM corridor needs to be defined as a three-dimensional spatial region.

In addition to UAM, when various air vehicle such as aircraft, drones, and self-driving cars are required to travel along a predetermined path (corridor) based on predefined waypoints, technology for defining such paths in a three-dimensional space is required even for performing conformance monitoring of the transportation means.

Accordingly, there is an urgent need for an improved three-dimensional corridor generation model for stably generating a three-dimensional UAM corridor along a planned travel path of a UAM and a further improved conformance monitoring model for stably monitoring whether a UAM is following a UAM corridor without deviation according to a planned schedule.

## SUMMARY

In some embodiments of the present disclosure may provide a method and a device capable of generating a corridor, in which an air vehicle (e.g., UAM) flies, as a volumetric region formed by a combination of prisms and cylinders.

In some embodiments of the present disclosure may provide a method and a device capable of quickly, easily, and adaptively generating a corridor connecting fixes in consideration of frequently changing urban environments, building structures, changes in the locations/shapes of facilities, and unexpected situations such as construction sites in UAM.

In some embodiments of the present disclosure may provide a method and a device capable of accurately determining spatial conformance, which relates to the location of an air vehicle flying within a corridor of a volumetric region, and temporal conformance, which relates to whether the air vehicle is located at a specific position within the corridor at a planned time.

In some embodiments of the present disclosure may provide a method and a device capable of easily and quickly recognizing, in the spatial and temporal domain, whether an air vehicle is traveling within a given corridor without deviation.

According to one embodiment of the present disclosure, a method for monitoring conformance of a transportation means within a multi-waypoint-based three-dimensional corridor is provided. The method may comprise partitioning an air vehicle travel path along which the air vehicle travels to classify a plurality of partitions; identifying the location of the air vehicle in a volumetric region constituting the partitions; and determining conformance of the air vehicle with respect to the volumetric region according to the identified location.

In some embodiments, the partition may be configured as a volumetric region including a prism and a cylinder, and the determining of the conformance may include determining spatial conformance according to the location of the air vehicle with respect to the prism or the cylinder; and determining temporal conformance with respect to the prism or the cylinder after determining the spatial conformance. The determining of the conformance may further include determining whether the air vehicle is located within the volumetric region; and, based on the determination that the air vehicle is not located within the volumetric region, determining both the spatial conformance and the temporal conformance as "warning."

In some embodiments, the cylinder may be configured by overlapping an inner cylinder and an outer cylinder having a larger volume than the inner cylinder, and the determining of the spatial conformance may include determining whether the volumetric region in which the air vehicle is located is a cylinder or a prism; in response to the determination that the volumetric region in which the air vehicle is located is the cylinder, determining whether the cylinder in which the air vehicle is located is the inner cylinder; and in response to the determination that the cylinder in which the air vehicle is located is not the inner cylinder, determining the location of the air vehicle as the outer cylinder defining a caution region and determining the spatial conformance as "caution"; or in response to the determination that the cylinder in which the air vehicle is located is the inner cylinder, determining the location of the air vehicle as the inner cylinder defining a safety region and determining the spatial conformance as "compliance."

In some embodiments, the prism may be configured by overlapping an inner prism and an outer prism having a larger volume than the inner prism, and the determining of the spatial conformance may further include performing, in response to the determination that the volumetric region in which the air vehicle is located is the prism, determining whether the prism in which the air vehicle is located is the inner prism; and in response to the determination that the prism in which the air vehicle is located is not the inner prism, determining the location of the air vehicle as the outer prism defining a caution region and determining the spatial conformance as "caution"; or in response to the determination that the prism in which the air vehicle is located is the inner prism, determining the location of the air vehicle as the inner prism defining a safety region and determining the spatial conformance as "compliance."

In some embodiments, the method may further include, according as the spatial conformance is determined as "compliance" or "caution," applying an equation $t_{fastest} = t_c + \dfrac{d}{v_{max}}$ to calculate $t_{fastest}$, which is the time at which the air vehicle reaches an end fix related to the prism in the shortest possible time-where $v_{max}$ is the maximum cruising speed of an air vehicle, d is the distance between the air vehicle and the end fix, and $t_c$ is the time at the position where the air vehicle is located-and the determining of the temporal conformance may include, based on a satisfaction of condition $t_{fastest} < ETO - \Delta t_{tolerance}$, determining that the temporal conformance for the prism is not satisfied-where $ETO$ is the Estimated Time Over for a planned fix in a flight plan, and $\Delta t_{tolerance}$ is the allowable time range for the $ETO$.

In some embodiments, the determining of the temporal conformance may include determining the temporal conformance for the cylinder in the same manner as the spatial conformance.

In some embodiments, the partitioning the air vehicle travel path into the plurality of partitions may include identifying a plurality of fixes within the air vehicle travel path; defining a segment by connecting two neighboring fixes among the plurality of fixes; and generating a corridor having the volumetric region in a three-dimensional space based on the segment.

In some embodiments, the generating of the corridor having the volumetric region may include identifying a start fix and an end fix of each individual segment according to the movement direction of the air vehicle on the air vehicle travel path; and generating, as a corridor having the volumetric region, a prism, a cylinder, or a combination of the prism and the cylinder considering the latitudes, longitudes, and altitudes of the start fix and the end fix.

In some embodiments, the generating of the corridor having the volumetric region may include generating a prism between the start fix and the end fix when the latitudes and longitudes of the start fix and the end fix are different but their altitudes are the same; and generating a first cylinder between the start fix and the end fix when the latitudes and longitudes of the start fix and the end fix are the same but their altitudes are different. The generating of the prism may include determining the width of the prism based on the length of the segment; determining the depth of the prism based on a predetermined corridor width; and determining the height of the prism based on a difference between an upper altitude limit and a lower altitude limit of the start fix or the end fix. Additionally or alternatively, the generating of the first cylinder may include determining the diameter of the first cylinder based on the predetermined corridor width; and determining the height of the first cylinder based on the length of the segment.

In some embodiments, the method may further include calculating an internal angle between a first segment and a second segment that are adjacent to each other, and the generating of the corridor having the volumetric region may further include, when the calculated internal angle is within "0° + α," determining that the prism generated corresponding to the first segment and the prism generated corresponding to the second segment completely overlap and removing the generated prism corresponding to the second segment, wherein the α may be a predetermined threshold. The generating of the corridor having the volumetric region may further include, when the internal angle is not within "0° ± α," determining that the prism generated corresponding to the first segment and the prism generated corresponding to the second segment do not completely overlap and generating a second cylinder based on the end fix of the first segment; and connecting the prism of the first segment and the prism of the second segment via the second cylinder. Optionally, the second cylinder may be generated only when the end fix of the first segment is not a last fix within the air vehicle travel path.

According to another embodiment of the present disclosure, a device for monitoring conformance of a transportation means within a multi-waypoint-based three-dimensional corridor is provided. The device may comprise a partitioning unit configured to partition an air vehicle travel path along which an air vehicle moves into a plurality of partitions; an identification unit configured to identify the location of the air vehicle in the volumetric region constituting the partitions; and a processing unit configured to determine conformance of the air vehicle with respect to the volumetric region based on the identified location.

In some embodiments, the partition may be configured to include a prism and a cylinder as a volumetric region, and the processing unit may determine spatial conformance based on whether the air vehicle is located in the prism or the cylinder and, after determining the spatial conformance, determine temporal conformance with respect to the prism or the cylinder. For example, the processing unit may determine whether the air vehicle is located within the volumetric region, and based on the determination that the air vehicle is not located within the volumetric region, determine both the spatial conformance and the temporal conformance as "warning." Additionally or alternatively, the cylinder may be configured by overlapping an inner cylinder and an outer cylinder having a larger volume than the inner cylinder; and the processing unit may determine whether the volumetric region in which the air vehicle is located is a cylinder or a prism, and in response to the determination that the volumetric region in which the air vehicle is located is the cylinder, determine whether the cylinder in which the air vehicle is located is the inner cylinder; in response to the determination that the cylinder in which the air vehicle is located is not the inner cylinder, the processing unit may determine that the air vehicle is located in the outer cylinder defining a caution region and determine the spatial conformance as "caution," or in response to the determination that the cylinder in which the air vehicle is located is the inner cylinder, determine that the air vehicle is located in the inner cylinder defining a safety region and determine the spatial conformance as "compliance."

In some embodiments, the prism may be configured by overlapping an inner prism and an outer prism having a larger volume than the inner prism; and, in response to the determination that the volumetric region in which the air vehicle is located is the prism, the processing unit may determine whether the prism in which the air vehicle is located is the inner prism; in response to the determination that the prism in which the air vehicle is located is not the inner prism, the processing unit may determine that the air vehicle is located in the outer prism defining a caution region and determine the spatial conformance as "caution," or in response to the determination that the prism in which the air vehicle is located is the inner prism, determine that the air vehicle is located in the inner prism defining a safety region and determine the spatial conformance as "compliance."

In some embodiments, the device may further include, according as the spatial conformance is determined as "compliance" or "caution," a calculation unit applying an equation $t_{fastest} = t_c + \dfrac{d}{v_{max}}$ to calculate $t_{fastest}$, which is the time at which the air vehicle reaches an end fix related to the prism in the shortest possible time-where $v_{max}$ is the maximum cruising speed of an air vehicle, $d$ is the distance between the air vehicle and the end fix, and $t_c$ is the time at the position where the air vehicle is located. Based on a satisfaction of condition $t_{fastest} < ETO - \Delta t_{tolerance}$, the processing unit may determine that the temporal conformance for the prism is not satisfied-where $ETO$ is the Estimated Time Over for a planned fix in a flight plan, and $\Delta t_{tolerance}$ is the allowable time range for the $ETO$.

In some embodiments, the processing unit may determine the temporal conformance for the cylinder in the same manner as for the spatial conformance.

In some embodiments, the partitioning unit may include a segment defining unit identifying a plurality of fixes within the air vehicle travel path and defining a segment by connecting two neighboring fixes among the plurality of fixes; and a corridor generating unit generating a corridor having a volumetric region in a three-dimensional space based on the segment.

In some embodiments, the corridor generating unit may identify a start fix and an end fix of each individual segment according to the movement direction of the air vehicle on the travel path and generate, as a corridor having the volumetric region, a prism, a cylinder, or a combination of the prism and the cylinder considering the latitudes, longitudes, and altitudes of the start fix and the end fix. The corridor generating unit may generate a prism between the start fix and the end fix when the latitudes and longitudes of the start fix and the end fix are different but their altitudes are the same; and generate a first cylinder between the start fix and the end fix when the latitudes and longitudes of the start fix and the end fix are the same but their altitudes are different. For example, the corridor generating unit may determine the width of the prism based on the length of the segment, determine the depth of the prism based on a predetermined corridor width, and determine the height of the prism based on a difference between an upper altitude limit and a lower altitude limit of the start fix or the end fix. Additionally or alternatively, the corridor generating unit may determine the diameter of the first cylinder based on the predetermined corridor width and determine the height of the first cylinder based on the length of the segment.

In some embodiments, the device may further include an internal angle calculation unit calculating an internal angle between a first segment and a second segment that are adjacent to each other. When the internal angle calculated by the internal angle calculation unit is within "0° ± α," the corridor generating unit may determine that the prism generated corresponding to the first segment and the prism generated corresponding to the second segment completely overlap and remove the generated prism corresponding to the second segment, wherein the α may be a pre-determined threshold. Additionally or alternatively, when the internal angle calculated by the internal angle calculation unit is not within "0° ± α," the corridor generating unit may determine that the prism generated corresponding to the first segment and the prism generated corresponding to the second segment do not completely overlap, generate a second cylinder based on the end fix of the first segment, and connect the prism of the first segment and the prism of the second segment via the second cylinder. Optionally, the second cylinder may be generated only when the end fix of the first segment is not a last fix within the air vehicle travel path.

According to yet another embodiment of the present disclosure, a method for generating a three-dimensional corridor using multiple waypoints may be provided. The method may comprise identifying a plurality of fixes within a travel path of a UAM; defining a segment by connecting two neighboring fixes among the plurality of fixes; and generating a corridor having a volumetric region in a three-dimensional space based on the segment.

In some embodiments, the generating of the corridor having the volumetric region may include identifying a start fix and an end fix of each individual segment according to the movement direction of the UAM on the travel path; and generating, as a corridor having the volumetric region, a prism, a cylinder, or a combination of the prism and the cylinder considering the latitude, longitude, and altitude of the start fix and the end fix.

In some embodiments, the generating of the corridor having the volumetric region may include generating a prism between the start fix and the end fix when the latitudes and longitudes of the start fix and the end fix are different but their altitudes are the same; and generating a first cylinder between the start fix and the end fix when the latitudes and longitudes of the start fix and the end fix are the same but their altitudes are different. The generating of the prism may include determining the width of the prism as the length of the segment; determining the depth of the prism as a specified corridor width; and determining the height of the prism as the difference between the upper altitude limit and the lower altitude limit of the start fix or the end fix. Additionally or alternatively, the generating of the first cylinder may include determining the diameter of the first cylinder as the specified corridor width; and determining the height of the first cylinder as the length of the segment.

In some embodiments, the method may further include calculating an internal angle between a first segment and a second segment that are adjacent to each other, and the generating of the corridor having the volumetric region may further include, when the calculated internal angle is within "$0° \pm \alpha$," determining that the prism generated corresponding to the first segment and the prism generated corresponding to the second segment completely overlap and removing the generated prism corresponding to the second segment, wherein the $\alpha$ may be a predetermined threshold. The generating of the corridor having the volumetric region may further include, when the internal angle is not within "$0° \pm \alpha$," determining that the prism generated corresponding to the first segment and the prism generated corresponding to the second segment do not completely overlap and generating a second cylinder based on the end fix of the first segment; and connecting the prism of the first segment and the prism of the second segment via the second cylinder. Optionally, the second cylinder may be generated only when the end fix of the first segment is not a last fix within the UAM travel path.

According to yet another embodiment of the present disclosure, a device for generating a three-dimensional corridor using multiple waypoints may be provided. The device may comprise a segment defining unit configured to identify a plurality of fixes within a travel path of a UAM and define a segment by connecting two neighboring fixes among the plurality of fixes; and a corridor generating unit configured to generate a corridor having a volumetric region in a three-dimensional space based on the segment.

In some embodiments, the corridor generating unit may identify a start fix and an end fix of each individual segment according to the movement direction of the UAM on the travel path and generate, as the corridor having the volumetric region, a prism, a cylinder, or a combination of the prism and the cylinder considering the latitudes, longitudes, and altitudes of the start fix and the end fix. The corridor generating unit may generate a prism between the start fix and the end fix when the latitudes and longitudes of the start fix and the end fix are different but their altitudes are the same; and generate a first cylinder between the start fix and the end fix when the latitudes and longitudes of the start fix and the end fix are the same but their altitudes are different. For example, the corridor generating unit may determine the width of the prism as the length of the segment, determine the depth of the prism as a specified corridor width, and determine the height of the prism as the difference between the upper altitude limit and the lower altitude limit of the start fix or the end fix. Additionally or alternatively, the corridor generating unit may determine the diameter of the first cylinder as the specified corridor width and determine the height of the first cylinder as the length of the segment.

In some embodiments, the device may further include an internal angle calculation unit calculating an internal angle between a first segment and a second segment that are adjacent to each other. When the internal angle calculated by the internal angle calculation unit is within "$0° \pm \alpha$," the corridor generating unit may determine that the prism generated corresponding to the first segment and the prism generated corresponding to the second segment completely overlap and remove the generated prism corresponding to the second segment, wherein the $\alpha$ may be a pre-determined threshold. Additionally or alternatively, when the internal angle calculated by the internal angle calculation unit is not within "$0° \pm \alpha$," the corridor generating unit may determine that the prism generated corresponding to the first segment and the prism generated corresponding to the second segment do not completely overlap, generate a second cylinder based on the end fix of the first segment, and connect the prism of the first segment and the prism of the second segment via the second cylinder. Optionally, the second cylinder may be generated only when the end fix of the first segment is not a last fix within the UAM travel path.

According to yet another aspect of the present disclosure, a computer-readable recording medium recording a program for executing the methods described above may be further provided.

According to some embodiments of the present disclosure, a corridor in which a UAM flies may be generated as a volumetric region composed of a combination of prisms and cylinders.

According to some embodiments of the present disclosure, in UAM, a corridor may be quickly, easily, and adaptively generated with respect to fixes in consideration of frequently changing urban environments, building structures, changes in the locations/shapes of facilities, and unexpected situations such as construction sites.

According to some embodiments of the present disclosure, it is possible to accurately determine spatial conformance, which relates to the location of an air vehicle flying within a corridor having a volumetric region, and temporal conformance, which relates to whether the air vehicle is located at a specific position within the corridor at a planned time.

According to some embodiments of the present disclosure, whether an air vehicle is traveling within a given corridor without deviation may be easily and quickly recognized in the spatial/temporal domain.

## BRIEF DESCRIPTION OF THE DRAWINGS

FIG. 1 is a conceptual diagram illustrating the operation of K-UAM.

FIG. 2 is a block diagram illustrating a configuration of a device for monitoring conformance of a transportation means within a multi-waypoint-based three-dimensional corridor according to one embodiment of the present disclosure.

FIG. 3 is a block diagram illustrating a configuration of a partitioning unit according to one embodiment of the present disclosure.

FIG. 4 illustrates, in two dimensions, a travel path of an air vehicle within a corridor composed of multiple fixes.

FIG. 5 is a plan view exemplarily showing a corridor that may be generated for the travel path of FIG. 4.

FIGS. 6A, 6B, and 6C exemplarily show a prism and cylinders as volumetric regions.

FIG. 7 exemplarily shows a partitioning of a corridor that may be generated for the travel path shown in FIG. 4.

FIG. 8 illustrates a prism corresponding to a segment.

FIG. 9 illustrates an internal angle formed by three consecutive fixes within a corridor.

FIGS. 10A, 10B, and 10C illustrate the conformance states of an air vehicle with respect to a corridor.

FIG. 11 illustrates generating a volumetric region by mutual overlapping.

FIG. 12 illustrates the location of an air vehicle on a travel path.

FIG. 13 illustrates checking of temporal conformance.

FIG. 14 is a flow diagram illustrating partitioning of a corridor into segments and generation of a volumetric region for each segment according to one embodiment of the present disclosure.

FIG. 15 is a flow diagram of conformance monitoring according to one embodiment of the present disclosure.

FIG. 16 is a flow diagram illustrating a method for monitoring conformance of a transportation means within a multi-waypoint-based three-dimensional corridor according to one embodiment of the present disclosure.

FIG. 17 is a flow diagram illustrating a method for generating a three-dimensional corridor using multiple waypoints according to one embodiment of the present disclosure.

## DETAILED DESCRIPTION

Hereinafter, some exemplary embodiments of the present disclosure will be described in detail with reference to the accompanying drawings. In the following description, like reference numerals preferably designate like elements, although the elements are shown in different drawings. Further, in the following description of some embodiments, a detailed description of known functions and configurations incorporated therein will be omitted for the purpose of clarity and for brevity.

Additionally, various terms such as first, second, A, B, (a), (b), etc., are used solely to differentiate one component from the other but not to imply or suggest the substances, order, or sequence of the components. Throughout this specification, when a part 'includes' or 'comprises' a component, the part is meant to further include other components, not to exclude thereof unless specifically stated to the contrary. The terms such as 'unit', 'module', and the like refer to one or more units for processing at least one function or operation, which may be implemented by hardware, software, or a combination thereof.

FIG. 2 is a block diagram illustrating a configuration of a device for monitoring conformance of a transportation means within a multi-waypoint-based three-dimensional corridor according to one embodiment of the present disclosure.

Referring to FIG. 2, a device for monitoring conformance of a transportation means within a multi-waypoint-based three-dimensional corridor according to one embodiment of the present disclosure (hereinafter referred to as "monitoring device" 200) may comprise a partitioning unit 210, an identification unit 220, and a processing unit 230. Also, the monitoring device 200 may optionally include a calculation unit 240 depending on the embodiment.

To implement a conformance monitoring technique for a corridor, it is necessary to identify whether an air vehicle is inside or outside the corridor. The air vehicle may be a concept including various air transportation means such as aircraft, eVTOL, Urban Air Mobility (UAM), unmanned aerial vehicles (UAV).

To identify whether an air vehicle is inside or outside the corridor, it is first necessary to three-dimensionally define a corridor region in a three-dimensional space.

To this end, the partitioning unit 210 may partition an air vehicle travel path along which an air vehicle (e.g., a UAM) travels into a plurality of partitions. In other words, the partitioning unit 210 may divide the air vehicle travel path along which an air vehicle travels in units of segment and classify each segment as a separate partition.

The air vehicle travel path may include fixes as inflection points where an air vehicle such as a UAM changes its longitude and latitude or its altitude in horizontal or vertical flight, segments connecting neighboring fixes as a start fix and an end fix, and rectangular prisms and cylinders as volumetric regions generated based on the segments. In the present disclosure, the "air vehicle travel path" may also be referred to as a "travel path line."

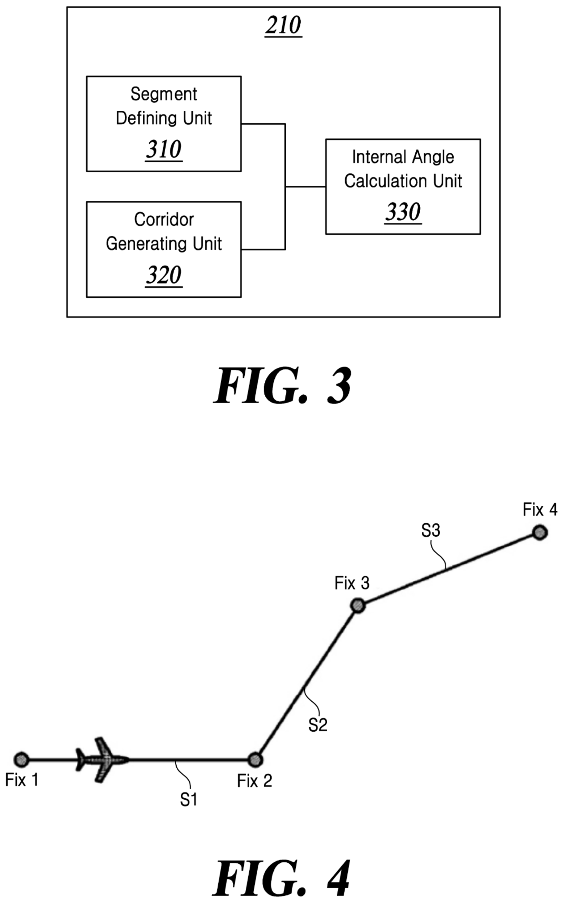

By partitioning the air vehicle travel path in units of segment, the partitioning unit 210 may generate a classified partition include rectangular prisms and cylinders generated in association with the start fix and the end fix of each segment. Various examples in which the partitioning unit 210 partitions the air vehicle travel path in units of segment will be described later with reference to FIGS. 3 to 9.

The identification unit 220 identifies the location of the air vehicle within the volumetric region constituting the partition. In other words, the identification unit 220 may serve to specify the positions of points at which the air vehicle is flying within the volumetric region, such as the prism or the cylinder.

The processing unit 230 determines the conformance of the air vehicle with respect to the volumetric region based on the identified location. In other words, the processing unit 230 may serve to determine whether a point within the volumetric region where the air vehicle is flying is suitable in terms of both location and time.

FIG. 3 is a block diagram illustrating a configuration of a partitioning unit according to one embodiment of the present disclosure.

The partitioning unit 210 according to one embodiment of the present disclosure may generate a volumetric region of the corridor in which an air vehicle (e.g., a UAM) flies.

Referring to FIG. 3, the partitioning unit 210 according to one embodiment of the present disclosure may include a segment defining unit 310, a corridor generating unit 320, and an internal angle calculation unit 330. Meanwhile, the present disclosure assumes that the partitioning unit 210 is a subcomponent of the monitoring device 200; however, the assumption is introduced only for the convenience of description, and the present disclosure is not limited thereto. For example, the partitioning unit 210 may be implemented as a standalone device independent of the monitoring device 200. In this case, the partitioning unit 210 may also be referred to as a three-dimensional corridor generating device.

The segment defining unit 310 may identify a plurality of fixes within the travel path of the air vehicle. In other words, the segment defining unit 310 may serve to designate, as fixes, inflection points on the travel path where the air vehicle changes its direction of travel.

Here, a fix may be specified as an inflection point at which the air vehicle changes its latitude and longitude or altitude to fly horizontally, vertically, or diagonally.

The segment defining unit 310 may define a segment by connecting two neighboring fixes among the plurality of fixes. In other words, the segment defining unit 310 may serve to connect a pair of consecutive fixes, specified in the movement direction of the UAM, using a straight-line segment.

The corridor generating unit 320 may generate a corridor having a volumetric region in a three-dimensional space based on the segment. In other words, the corridor generating unit 320 may serve to design a three-dimensional corridor around the segment, within which the air vehicle flies safely.

In generating the corridor, the corridor generating unit 320 may generate a corridor in the form of a prism or a cylinder around the segment by considering the latitudes, longitudes, and altitudes of the fixes.

To this end, the corridor generating unit 320 may identify a start fix and an end fix of each individual segment according to the movement direction of the air vehicle along the travel path. In other words, the corridor generating unit 320 may identify, for each segment, the start fix at which the segment begins and the end fix at which the segment ends.

For example, when a first segment and an adjacent second segment are generated along the travel path, the corridor generating unit 320 may identify a first start fix and a first end fix for the first segment, and a second start fix and a second end fix for the second segment along the movement direction of the air vehicle.

The corridor generating unit 320 may generate a corridor having a volumetric region in the form of a prism, a cylinder, or a combination of the prism and the cylinder by taking into account the latitudes, longitudes, or altitudes of the start fix and the end fix.

The corridor generating unit 320 may generate only a prism if the latitudes and longitudes of the start fix and the end fix differ while their altitudes are the same.

Additionally or Alternatively, if the latitudes and longitudes of the start fix and the end fix are identical but the altitudes are different, the corridor generating unit 320 may generate only a cylinder (hereinafter referred to as a first cylinder).

Additionally or Alternatively, if the internal angle between neighboring segments is sufficiently large, the corridor generating unit 320 may generate both a prism generated in association with each segment and a cylinder (hereinafter referred to as a second cylinder) connecting two prisms.

For example, when the latitudes and longitudes of the start fix and the end fix are different but the altitudes are the same, the corridor generating unit 320 may generate a prism between the start fix and the end fix. In other words, when the positions of the start fix and the end fix of the segment are specified as different coordinates at the same altitude, the corridor generating unit 320 may generate a corridor in the form of a prism as a volumetric region between the start fix and the end fix.

In generating the prism, the corridor generating unit 320 may determine the width of the prism as the length of the segment, determine the depth of the prism as a predefined corridor width, and determine the height of the prism as the difference between the upper altitude limit and the lower altitude limit of the start fix or the end fix.

Here, the corridor width may be set as a safety margin for an air vehicle flying in the horizontal direction, and the upper altitude limit and lower altitude limit may be set as a vertical safety margin for an air vehicle flying in the vertical direction. The corridor width, upper altitude limit, and lower altitude limit may be set flexibly in consideration of the operator's experience and the performance of the air vehicle.

For example, when the latitudes and longitudes of a first start fix and a first end fix are different but their altitudes are the same, the corridor generating unit 320 may generate, for the first segment, a corridor in the form of a prism between the first start fix and the first end fix, where the segment length $x$, the corridor width $y$, and the difference $h$ between the upper altitude limit and the lower altitude limit correspond to the width, depth, and height of the prism, respectively.

When the latitudes and longitudes of the start fix and the end fix are the same but their altitudes are different, the corridor generating unit 320 may generate a first cylinder between the start fix and the end fix. In other words, when the positions of the start fix and the end fix of the segment are specified to be at the same coordinates in two-dimensional space but at different altitudes, the corridor generating unit 320 may generate a corridor having the first cylinder as a volumetric region between the start fix and the end fix.

In generating the first cylinder, the corridor generating unit 320 may determine the diameter of the first cylinder based on the defined corridor width and determine the height of the first cylinder based on the length of the segment.

For example, when the latitudes and longitudes of the first start fix and the first end fix are the same but their altitudes are different, the corridor generating unit 320 may generate, for the first segment, a corridor having the first cylinder between the first start fix and the first end fix, where the corridor width and the segment length correspond to the diameter and the height of the first cylinder, respectively.

According to the embodiment, depending on whether prisms overlap, the corridor generating unit 320 may generate a corridor of a second cylinder connecting the prisms.

To this end, the partitioning unit 210 may further include an internal angle calculation unit 330.

The internal angle calculation unit 330 calculates the internal angle between a first segment and a second segment that are adjacent to each other as the prisms are generated. In other words, the internal angle calculation unit 330 may measure the angle formed on the inside between the first segment and the second segment.

In the above example in which a first start fix and a first end fix are identified for the first segment and a second start fix and a second end fix are identified for the second segment, the internal angle calculation unit 330 may calculate the internal angle formed by the first start fix, the fist end fix, and the second start fix.

when the calculated internal angle is within a predetermined range (e.g., "0° $\pm \alpha$"), the corridor generating unit 320 may determine that the prism generated corresponding to the first segment and the prism generated corresponding to the second segment completely overlap and remove the generated prism corresponding to the second segment. In other words, when the internal angle between the adjacent segments is calculated to be sufficiently small, the corridor generating unit 320 may determine that the prisms generated from the respective segments overlap each other and remove one of the prisms to generate a corridor.

Here, "$\alpha$" is the minimum value of the internal angle, based on which it may be determined that prisms do not completely overlap with each other, and may be flexibly set by the operator through experiments and experience.

For example, if the internal angle formed by the first start fix and the first end fix of the first segment and the second start fix of the second segment is sufficiently small, the corridor generating unit 320 may determine that the first and second segments are completely overlapped and remove the prism of the second segment.

When the internal angle is not within "0° $\pm \alpha$," the corridor generating unit 320 may determine that the prism generated corresponding to the first segment and the prism generated corresponding to the second segment are not completely overlapped and may generate a second cylinder based on the end fix of the first segment. In other words, when the internal angle between the adjacent segments is calculated to be sufficiently large, the corridor generating unit 320 may determine that the prisms generated from the respective segments do not overlap each other and may generate a second cylinder such that another prism is generated next to one prism and connected thereto.

The corridor generating unit 320 may determine the diameter of the second cylinder as the corridor width and determine the height of the second cylinder as the difference between the upper and lower altitude limits of the start fix and the end fix.

For example, if the internal angle formed by the first start fix, the first end fix, and the second start fix is sufficiently large, the corridor generating unit 320 may determine that the first and second segments are not completely overlapped and may generate a second cylinder such that the prism of the second segment is generated next to the prism of the first segment and connected thereto.

The corridor generating unit 320 may connect the prism of the first segment and the prism of the second segment via the second cylinder. In other words, the corridor generating unit 320 may generate a corridor in a three-dimensional space that naturally connects the prisms of adjacent segments by generating a second cylinder between the segments in which the respective prisms are generated.

According to an embodiment, when the end fix of the first segment is the last fix within the travel path, the corridor generating unit 320 may not generate the second cylinder. In other words, when the end fix of the first segment is the last fix on the travel path along which the air vehicle flies, the corridor generating unit 320 may terminate the generation of a corridor without generating the second cylinder, since no subsequent segment exists.

As described above, the partitioning unit 210 according to one embodiment of the present disclosure may generate a corridor in which the air vehicle flies as a volumetric region composed of a combination of prisms and cylinders.

The partitioning unit 210 may quickly, easily, and adaptively generate a corridor connecting fixes in consideration of frequently changing urban environments, building structures, changes in the locations/shapes of facilities, and unexpected situations such as construction sites in air vehicle.

Hereinafter, with reference to FIGS. 4 to 9, various examples of segments that may be configured by the partitioning unit 210 and a multi-waypoint-based three-dimensional corridor generated based thereon will be described.

FIG. 4 illustrates, in two dimensions, a travel path of an air vehicle within a corridor composed of multiple fixes.

As shown in FIG. 4, the travel path along which the air vehicle flies is composed of a plurality of fixes.

The partitioning unit 210 may establish segments by connecting neighboring fixes using straight lines.

In example of FIG. 4, the partitioning unit 210 may establish a first segment S1 connecting fix 1 and fix 2, a second segment S2 connecting fix 2 and fix 3, and a third segment S3 connecting fix 3 and fix 4.

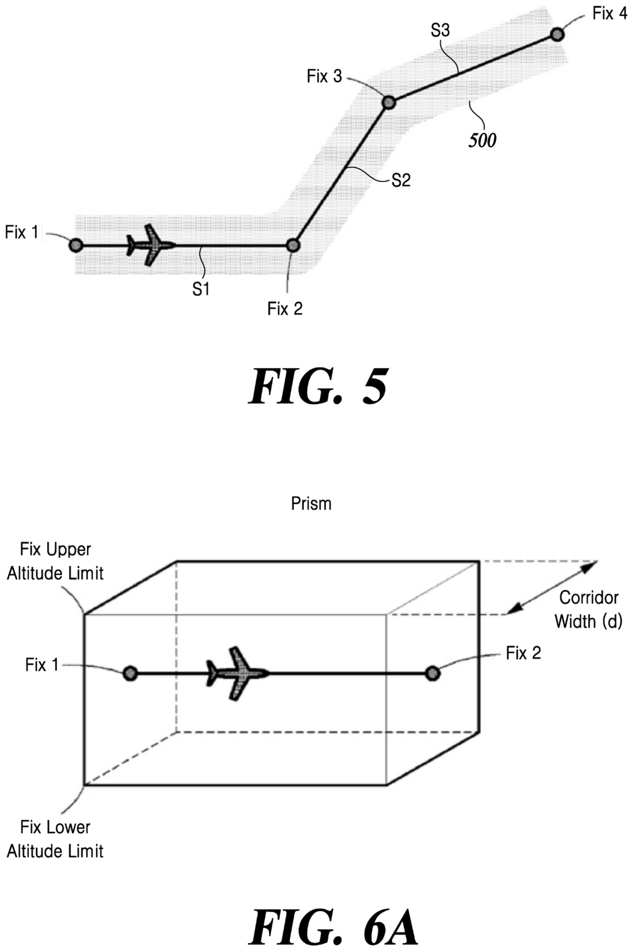

FIG. 5 is a plan view exemplarily showing a corridor that may be generated for the travel path of FIG. 4.

FIG. 5 shows a result obtained by generating a corridor region.

As shown in FIG. 5, the partitioning unit 210 may generate a corridor 500 having a three-dimensional input region on a two-dimensional plan view based on the travel path of the UAM.

The partitioning unit 210 may generate or define a volumetric region of the corridor in a three-dimensional space by using information on the latitude, longitude, and altitude of each fix; left and right widths of the corridor; and the upper and lower altitude limits of each fix.

For example, the partitioning unit 210 may generate a volumetric region of a prism in the three-dimensional space around the first segment S1 between fix 1 and fix 2, which have different latitudes and longitudes and are located at the same altitude.

If the latitudes and longitudes of fix 1 and fix 2 are the same but their altitudes are different, the partitioning unit 210 may generate a volumetric region of a first cylinder between fix 1 and fix 2.

Similarly, the partitioning unit 210 may generate a volumetric region of a prism for each of the second segment S2 between fix 2 and fix 3 and the third segment S3 between fix 3 and fix 4.

Also, the partitioning unit 210 may generate a volumetric region of a second cylinder connecting the first segment S1 and the second segment S2 by checking whether the internal angle between the first segment S1 and the second segment S2 is sufficiently large.

Accordingly, the partitioning unit 210 may generate a corridor of a volumetric region represented as a combination of a prism and a cylinder.

FIGS. 6A to 6C exemplarily show a prism and cylinders as volumetric regions.

As illustrated in FIGS. 6A to 6C, the partitioning unit 210 may generate a corridor of a volumetric region represented as a combination of a prism and a cylinder.

FIG. 6A exemplarily shows a volumetric region in the form of a prism generated when the latitudes and longitudes of the start fix and the end fix of a segment are different while their altitudes are the same. The partitioning unit 210 may generate a prism between fix 1, which is the start fix, and fix 2, which is the end fix, based on a determination that the latitudes and longitudes of fix 1 and fix 2 are different but their altitudes are the same. At this time, the width of the prism may be defined based on the length of the segment, the depth of the prism may be defined based on the corridor width d, and the height of the prism may be defined based on the difference between the upper altitude limit and the lower altitude limit of the fixes.

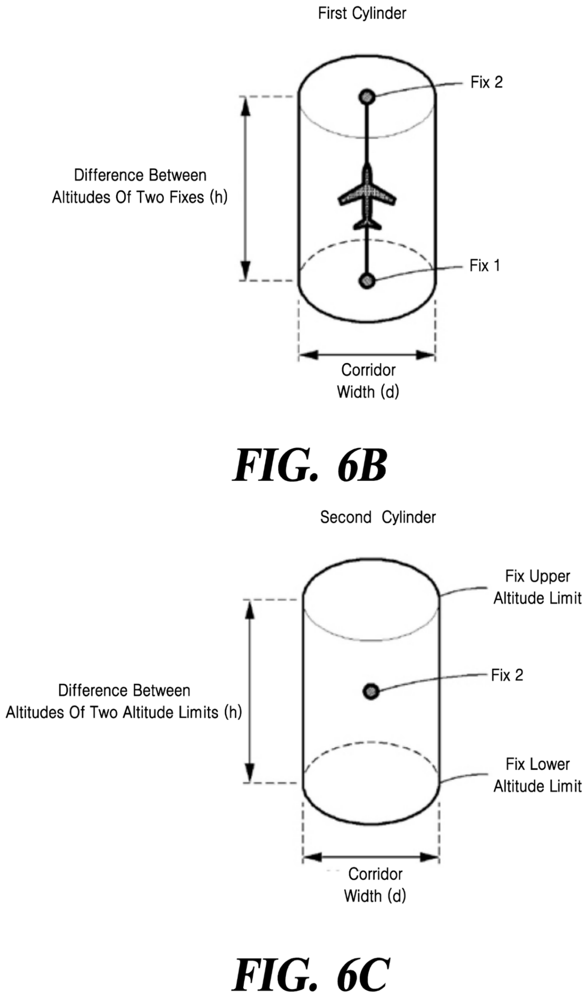

FIG. 6B exemplarily shows a volumetric region in the form of a first cylinder generated when the latitudes and longitudes of the start fix and the end fix of a segment are the same while their altitudes are different. The partitioning unit 210 may generate a first cylinder between fix 1, which is the start fix, and fix 2, which is the end fix, based on a determination that the latitudes and longitudes of fix 1 and fix 2 are the same but their altitudes are different. At this time, the diameter of the first cylinder may be defined based on the corridor width d, and the height h of the first cylinder may be defined based on the altitude difference between fix 1 and fix 2.

FIG. 6C exemplarily shows a volumetric region in the form of a second cylinder generated when the internal angle between neighboring segments exceeds a predetermined range. The partitioning unit 210 may generate a second cylinder with reference to fix 2, which is the end fix, based on a determination that the internal angle between the neighboring segments is sufficiently large. FIG. 6C illustrates a second cylinder having fix 2 positioned at its center; however, the illustration is merely an example, and the partitioning unit 210 may generate various other forms of second cylinders including fix 2. At this time, the diameter of the second cylinder may be defined based on the corridor width d, and the height may be defined based on the difference between the upper altitude limit and the lower altitude limit.

The partitioning unit 210 may represent the volumetric region of the corridor as a cylinder for a fix at which prisms overlap.

The partitioning unit 210 may divide the corridor into volumetric regions defined as a combination of a plurality of prisms and cylinders.

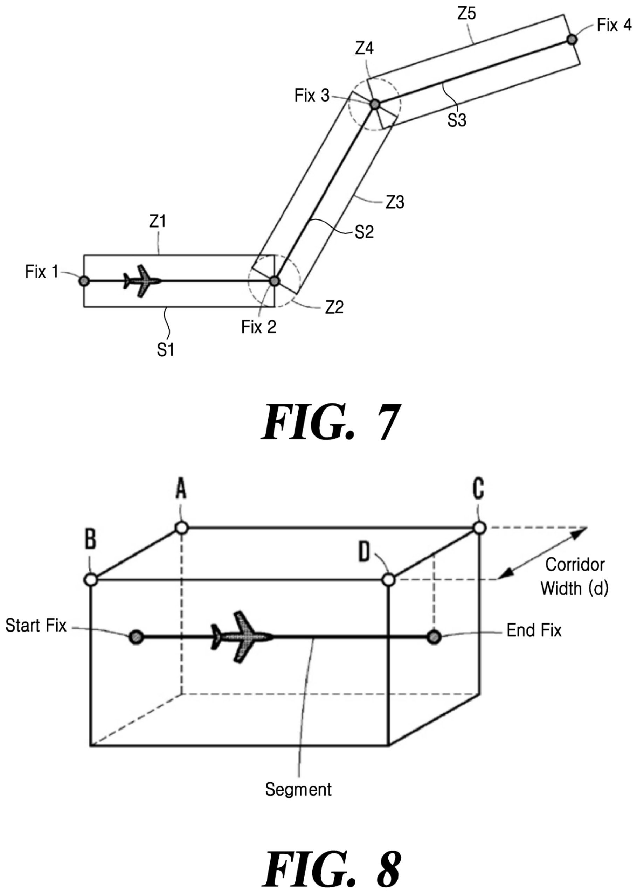

FIG. 7 exemplarily shows a partitioning of a corridor that may be generated for the travel path shown in FIG. 4.

The partitioning unit 210 may generate a three-dimensional corridor region in a three-dimensional space.

As shown in FIG. 7, the partitioning unit 210 may partition the corridor into a plurality of segments S1, S2, and S3 based on position information of each fix, corridor width, and the movement direction of the air vehicle and may define subregions of the corridor Z1, Z2, Z3, Z4, and Z5 corresponding to the respective segments as volumetric regions.

The partitioning unit 210 may define each of the regions Z1, Z2, Z3, Z4, or Z5 as a prism or as a cylinder connecting prisms.

In other words, the partitioning unit 210 may partition the corridor into a structure in which a plurality of prisms are connected by cylinders, with each cylinder intersecting and joining adjacent prisms.

Here, the segments S1, S2, and S3 may refer to straight-line sections, each of which consists of two consecutive fixes within the corridor.

In example of FIG. 7, the partitioning unit 210 may generate corridor regions 1, 3, 5 (Z1, Z3, Z5) in the form of a prism for the regions corresponding to the three segments S1, S2, S3 defined by fixes 1 to 4.

Also, the partitioning unit 210 may generate corridor regions 2, 4 (Z2, Z4) in the form of a cylinder by considering the internal angle between corridor region 1 (Z1) and corridor region 3 (Z3) and the internal angle between corridor region 3 (Z3) and corridor region 5 (Z5).

The partitioning unit 210 may sequentially identify each segment S1, S2, S3 from the start fix of the corridor and may generate or define a volumetric region (e.g., a prism or a cylinder) corresponding to each segment.

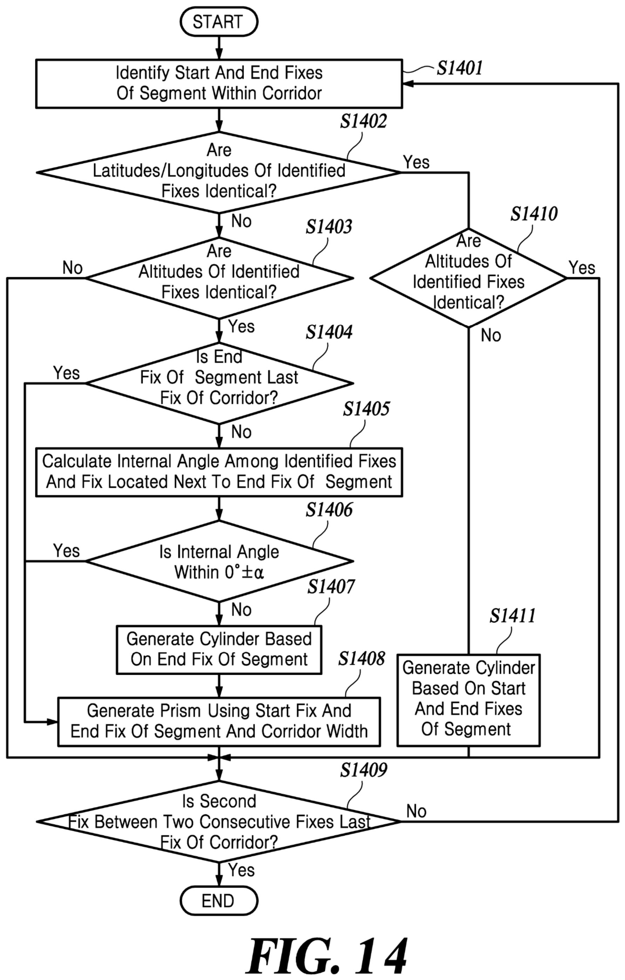

The partitioning unit 210 may perform region definition for corridor subregions according to the flowchart illustrated in FIG. 14 described later.

The partitioning unit 210 may identify segments S1, S2, S3, each of which consists of two consecutive fixes from the start fix of the corridor and may acquire location information (e.g., latitude, longitude, and altitude) of each fix.

The partitioning unit 210 may compare the latitude/longitude of the start fix and the end fix of the next segment to check whether the two fixes have the same two-dimensional locations within a predetermined tolerance range. The partitioning unit 210 may also check whether the altitudes of the two fixes are the same based on a predetermined tolerance range. At this time, the partitioning unit 210 may receive, from a user, the tolerance range for determining whether two fixes are identical.

If the latitude/longitude locations of the two fixes are the same and their altitudes are also the same, the partitioning unit 210 may determine the two fixes to be at the same point and may not generate a separate volumetric region.

If the latitude/longitude locations of the two fixes are the same but their altitudes are different, the monitoring device 200 may generate a first cylinder (e.g., second region Z2 in FIG. 7) having the corridor width as its diameter.

At this time, the partitioning unit 210 may set the lower altitude of the first cylinder to the smaller value between the altitudes of the start fix and end fix of a segment and may set the upper altitude limit of the first cylinder to the larger value between the altitudes of the start fix and end fix of the segment.

If the two fixes of a segment have different two-dimensional locations (i.e., latitude/longitude locations) but the same altitude, the partitioning unit 210 may check whether the end fix of the segment is the end fix of the corridor.

FIG. 8 illustrates a prism corresponding to a segment.

If the end fix of the segment is the last fix of the corridor, the partitioning unit 210 may generate a prism using the start fix and the end fix of the corridor and the corridor width information.

the partitioning unit 210 may calculate and define the latitude/longitude and altitude of each corner point (points A, B, C, and D in FIG. 8) of the prism using Eqs. 1 to 16.

If the latitude/longitude (unit: degrees) of the start fix of the segment are referred to as Lat1 and Lon1, respectively, and the latitude/longitude (unit: degrees) of the end fix of the segment are referred to as Lat2 and Lon2, respectively, the partitioning unit 210 may convert each coordinate value into a radian value using Eqs. 1 and 2.

[Eq. 1]

$$\varphi_1 = Lat1 \times \frac{\pi}{180}$$
$$\lambda_1 = Lon1 \times \frac{\pi}{180}$$

[Eq. 2]

$$\varphi_2 = Lat2 \times \frac{\pi}{180}$$
$$\lambda_2 = Lon2 \times \frac{\pi}{180}$$

Here, $\varphi_1$ may represent the radian value of the latitude of the start fix of a segment, $\lambda_1$ may represent the radian value of the longitude of the start fix of the segment, $\varphi_2$ may represent the radian value of the latitude of the end fix of the segment, and $\lambda_2$ may represent the radian value of the longitude of the end fix of the segment.

The partitioning unit 210 may calculate the azimuth angle $\theta$ between the start fix and the end fix of the next segment using Eqs. 3 to 7.

[Eq. 3]

$$\Delta\lambda = \lambda_2 - \lambda_1$$

[Eq. 4]

$$y = \sin(\Delta\lambda) \cdot \cos(\varphi_2)$$

[Eq. 5]

$$x = \cos(\varphi_1) \cdot \sin(\varphi_2) - \sin(\varphi_1) \cdot \cos(\varphi_2) \cdot \cos(\Delta\lambda)$$

[Eq. 6]

$$\theta' = \mathrm{atan2}(y, x)$$

[Eq. 7]

$$\theta = \theta' \times \frac{\pi}{180}$$

Here, $\theta$ may represent the azimuth angle in degrees, and $\theta'$ may represent the azimuth angle in radians.

The partitioning unit 210 may normalize the azimuth angle $\theta$ obtained from Eq. 7 so that it has a value between 0 and 360 degrees. In other words, if the azimuth angle $\theta$ obtained through Eq. 7 has a negative value, the partitioning unit 210 may add 360 degrees so that the azimuth angle falls within the range of 0 to 360 degrees.

If the corridor width is $d$ (unit: meters) and the azimuth angle measured from the start fix to the end fix within the segment is $\theta$, the partitioning unit 210 may calculate the latitude $\phi$ of the vertex located to the left of the start fix (point A in FIG. 8) as shown in Eqs. 8 and 9 and may calculate the longitude $\Lambda$ as shown in Eqs. 10 and 11.

[Eq. 8]

$$\Delta\phi = \frac{(\frac{d}{2}) \cdot \cos((\theta + 90) \times \frac{\pi}{180})}{R}$$

[Eq. 9]

$$\phi = \text{Lat1} + \Delta\phi$$

[Eq. 10]

$$\Delta\Lambda = \frac{(\frac{d}{2}) \cdot \sin((\theta + 90) \times \frac{\pi}{180})}{R \cdot \cos(\varphi_1)}$$

[Eq. 11]

$$\Lambda = \text{Lon1} + \Delta\Lambda$$

Here, $R$ represents the radius of the Earth, and its unit may be meters.

If the corridor width is $d$ (unit: meters), the partitioning unit 210 may obtain $\Delta\varphi$ and $\Delta\Lambda$ through Eqs. 12 and 13 and apply the obtained $\Delta\varphi$ and $\Delta\Lambda$ to Eqs. 9 and 11, respectively, to obtain the latitude and longitude of the vertex (point B in FIG. 7) located to the right of the start fix of the segment.

[Eq. 12]

$$\Delta\phi = \frac{(\frac{d}{2}) \cdot \cos((\theta - 90) \times \frac{\pi}{180})}{R}$$

[Eq. 13]

$$\Delta\Lambda = \frac{(\frac{d}{2}) \cdot \sin((\theta - 90) \times \frac{\pi}{180})}{R \cdot \cos(\varphi_1)}$$

The partitioning unit 210 may apply the $\Delta\varphi$ obtained after calculating Eq. 8 to Eq. 14 to obtain the latitude of the vertex (point C in FIG. 7) located to the left of the end fix of the segment.

[Eq. 14]

$$\phi = \text{Lat2} + \Delta\phi$$

Also, the partitioning unit 210 may apply $\varphi_2$ instead of $\varphi_1$ to Eq. 10 to obtain $\Delta\Lambda$ and then apply the obtained value to Eq. 15 to obtain the longitude of the vertex (point C in FIG. 7) located to the left of the end fix of the segment.

[Eq. 15]

$$\Lambda = \text{Lon2} + \Delta\Lambda$$

The partitioning unit 210 may apply the $\Delta\varphi$, obtained through Eq. 12, to Eq. 14 to obtain the latitude of the vertex (point D in FIG. 7) located to the right of the end fix of the segment, apply $\varphi_2$ instead of $\varphi_1$ to Eq. 13 to obtain $\Delta\Lambda$, and then apply the obtained value to Eq. 15 to obtain the longitude of the corresponding vertex.

Once the latitude and longitude coordinates of each vertex of the prism are calculated, the upper and lower altitudes of the prism may be defined based on the upper and lower altitudes of the corridor.

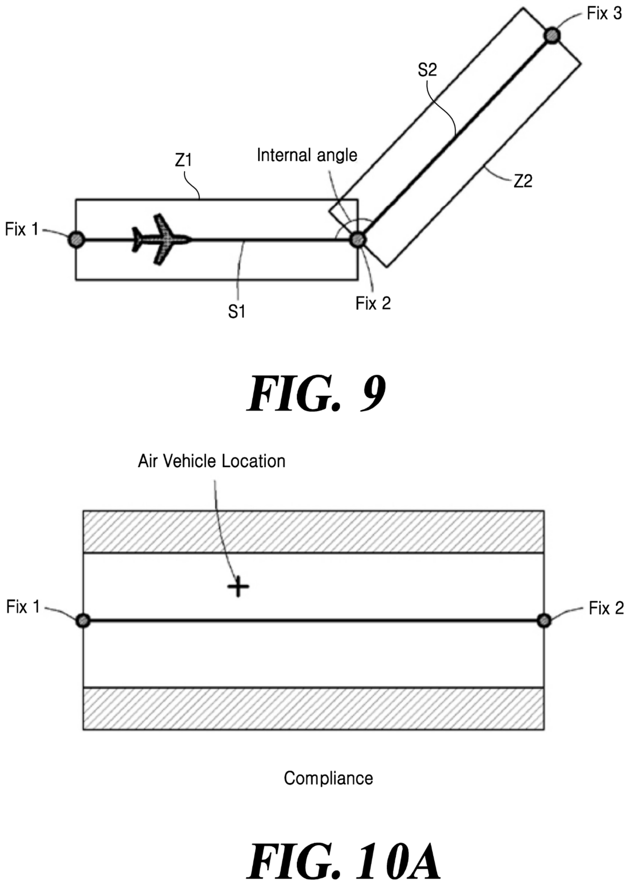

FIG. 9 illustrates an internal angle formed by three consecutive fixes within a corridor.

If the end fix of a segment (e.g., first segment S1) is not the last fix of the corridor, the partitioning unit 210 may use the latitude and longitude information of the start fix of first segment S1 (fix 1 of FIG. 9), the end fix of first segment S1 (fix 2 of FIG. 9), and the fix following the end fix of first segment (fix 3 of FIG. 9) to calculate the internal angle $\Psi$ of the three fixes as shown in Eq. 16.

[Eq. 16]

$$\Psi = \frac{(Lat2 - Lat1)(Lat3 - Lat2) + (Lon2 - Lon1)(Lon3 - Lon2)}{(Lat2 - Lat1)(Lon3 - Lon2) - (Lon2 - Lon1)(Lat3 - Lat2)}$$

In Eq. 16, *Lat*1 and *Lon*1 may represent the latitude and longitude of the start fix of each segment, respectively, *Lat2* and *Lon2* may represent the latitude and longitude of the end fix of each segment, respectively, and *Lat3* and *Lon3* may represent the latitude and longitude of the fix following the segment.

Since the internal angle obtained from Eq. 16 is in radians, the partitioning unit 210 may convert the internal angle $\Psi$ into degrees, and if the converted value is negative, the partitioning unit 210 may add 180 degrees to normalize the internal angle to fall within a range of 0 to 360 degrees.

If the internal angle $\Psi$ lies within $0° \pm \alpha$, the partitioning unit 210 may determine that the prism Z1 corresponding to first segment S1 and the prism Z2 corresponding to second segment S2 are completely overlapped with each other and may generate only the prism Z1 corresponding to first segment S1 by applying the latitude/longitude information of fix 1 and fix 2 to Eqs. 1 to 15.

If the internal angle $\Psi$ is not within $0° \pm \alpha$, the partitioning unit 210 may determine that the prism Z1 corresponding to first segment S1 and the prism corresponding to second segment S2 are not completely overlapped with each other and may generate a second cylinder having the corridor width as its diameter based on the end fix of first segment S1.

The partitioning unit 210 may define the upper and lower altitudes of the cylinder based on the upper and lower altitudes of the corridor.

The partitioning unit 210 may generate the prism Z1 corresponding to first segment S1 by applying Eqs. 1 to 15 to the start fix and the end fix of first segment S1.

As described above, the corridor having the volumetric region through which an air vehicle such as a UAM moves may be partitioned into a combination of a plurality of prisms and cylinders.

Referring back to FIG. 1, the processing unit 230 may determine the conformance of the air vehicle with respect to the volumetric region based on the location of the identified air vehicle within the volumetric region of the partition.

For the determination of conformance, each of the prisms and cylinders forming the volumetric region may be designed as a structure obtained by overlapping *n* pillars (*n* being a natural number larger than or equal to 2).

Here, the number *n* of overlapping pillars may be determined according to the number of levels for determining conformance.

For example, when conformance is classified into three levels of "compliance," "caution," and "warning," the number *n* of overlapping pillars may be set to 2.

When *n* is set to 2, two prisms may be overlapped, and the processing unit 230 may configure the two prisms as an inner prism and an outer prism having a larger volume than the inner prism.

The processing unit 230 may define the region occupied by the inner prism as a safety region corresponding to "compliance" conformance, the region between the inner prism and the outer prism as a caution region corresponding to "caution" conformance, and the outer region of the outer prism as a warning region corresponding to "warning" conformance.

Similarly, when n is 2, the cylinder may be configured by overlapping an inner cylinder and an outer cylinder having a larger volume than the inner cylinder.

The processing unit 230 may define the region occupied by the inner cylinder as a safety region related to conformance "compliance," the region between the inner cylinder and the outer cylinder as a caution region related to conformance "caution," and the region outside the outer cylinder as a warning region related to conformance "warning."

A partition may be configured to include a plurality of segments, start fixes and end fixes connected through the segments, and the volumetric regions formed in the form of prism and cylinder at the segments and the end fixes.

In an environment where the partition is configured as a combination of a prism and a cylinder, the processing unit 230 may determine the spatial conformance according to the location of the air vehicle within the prism or the cylinder.

In determining the spatial conformance, the processing unit 230 may determine whether the volumetric region in which the air vehicle is located is a cylinder or a prism. In other words, the processing unit 230 may determine whether the air vehicle is located in a corridor in the form of a prism generated based on a segment or in a cylindrical corridor generated based on an end fix of the segment.

If it is determined that the volumetric region in which the air vehicle is located is a cylinder, the processing unit 230 may determine whether the cylinder in which the air vehicle is located is an inner cylinder. In other words, the processing unit 230 may determine whether the location of the air vehicle is within the inner cylinder, which is the safety region.

If it is determined that the cylinder in which the air vehicle is located is not the inner cylinder, the processing unit 230 may confirm that the air vehicle is located in the outer cylinder defining the caution region and may evaluate the spatial conformance as "caution." In other words, the processing unit 230 may determine the spatial conformance for the air vehicle as "caution" as it is confirmed that the air vehicle is located in a region between the inner cylinder and the outer cylinder, which is the caution region.

On the other hand, if it is determined that the cylinder in which the air vehicle is located is the inner cylinder, the processing unit 230 may confirm that the air vehicle is located in the inner cylinder defining the safety region and may evaluate the spatial conformance as "compliance." In other words, the processing unit 230 may determine the spatial conformance for the air vehicle as "compliance" as it is confirmed that the air vehicle is located within the inner cylinder, which is the safety region.

Also, if the volumetric region in which the air vehicle is located is a prism, the processing unit 230 may determine whether the prism in which the air vehicle is located is the inner prism. In other words, the processing unit 230 may determine whether the air vehicle is located in the inner prism, which is the safety region.

If it is determined that the prism in which the air vehicle is located is not the inner prism, the processing unit 230 may confirm that the air vehicle is located in the outer prism defining the caution region and may evaluate the spatial conformance as "caution." In other words, the processing unit 230 may determine the spatial conformance for the air vehicle as "caution" as it is determined that the air vehicle is located between the inner prism and the outer prism, which is the caution region.

On the other hand, if it is determined that the prism in which the air vehicle is located is the inner prism, the processing unit 230 may confirm that the air vehicle is located in the inner prism defining the safety region and may evaluate the spatial conformance as "compliance." In other words, the processing unit 230 may determine the spatial conformance for the air vehicle as "compliance" as it is confirmed that the air vehicle is located within the inner prism, which is the safety region.

Also, the processing unit 230 may determine whether the air vehicle is located within the volumetric region, and, if it is determined that the air vehicle is not located within the volumetric region, the processing unit 230 may determine both the spatial conformance and the temporal conformance as "warning." In other words, the processing unit 230 may determine both the spatial conformance and the temporal conformance for the air vehicle as "warning" as it is confirmed that the air vehicle is flying outside the volumetric region and is thus located in the warning region.

The processing unit 230 may determine the temporal conformance for the prism or the cylinder after determining the spatial conformance. In other words, immediately after determining the spatial conformance, the processing unit 230 may determine the temporal conformance as to whether the air vehicle's location within the volumetric region is temporally suitable.

To numerically determine the temporal conformance for the prism, the monitoring device 200 may be further configured to include a calculation unit 240.

If the spatial conformance is determined as "compliance" or "caution," the calculation unit 240 may apply Eq. 17 to calculate $t_{fastest}$, which is the shortest possible time in which the air vehicle may arrive at the end fix.

$$[\text{Eq. 17}]$$

$$t_{fastest} = t_c + \frac{d}{v_{max}}$$

In Eq. 17, $v_{max}$ may denote the maximum cruising speed of the air vehicle, d may denote the distance between the air vehicle and the end fix, and $t_c$ may denote the time at the location where the air vehicle is located.

In other words, the calculation unit 240 may calculate the time $t_{fastest}$ required for the air vehicle, from its current location within the volumetric region, to reach the end fix of the segment associated with the volumetric region at its maximum capability.

The processing unit 230 may determine the temporal conformance for the prism by checking whether Eq. 18 is satisfied, which compares the calculated $t_{fastest}$ with the time allowed.

$$[\text{Eq. 18}]$$

$$t_{fastest} < ETO - \Delta t_{tolerance}$$

In Eq. 18, *ETO* may denote the Estimated Time Over for the fix as planned in a flight plan, and $\Delta t_{tolerance}$ may denote the allowable time range for the *ETO.*

In other words, the processing unit 230 may determine that the temporal conformance for the prism is not satisfied if Eq. 18 for $t_{fastest}$ is satisfied.

If $t_{fastest}$ is smaller than the difference between *ETO* and $\Delta t_{tolerance}$, and the air vehicle fails to reach the end fix at the expected time scheduled in a flight plan even at its maximum capability, the processing unit 230 may determine that the temporal conformance for the prism is not satisfied.

In determining temporal conformance in the cylinder, the processing unit 230 may determine the temporal conformance for the cylinder in the same manner as the spatial conformance. This is because, since the air vehicle may perform a fly-by of a fix in addition to a fly-over of the fix within the cylinder, it is difficult to clearly determine whether the air vehicle has actually passed over the fix or has not yet passed it.

In other words, regarding the temporal conformance of the cylinder, the processing unit 230 may directly apply the spatial conformance. For example, if the spatial conformance is determined as "compliance," the processing unit 230 may also determine the temporal conformance of the cylinder as "compliance,"; if the spatial conformance is determined as "caution," the processing unit 230 may also determine the temporal conformance of the cylinder as "caution."

As described above, the processing unit 230 may accurately determine the spatial conformance, which relates to the location of the air vehicle flying within the corridor of three-dimensional space and the temporal conformance, which relates to whether the air vehicle is located at a specific point within the corridor at a planned time.

Also, the processing unit 230 may easily and quickly recognize, in both the spatial and temporal domains, whether the air vehicle is moving without deviation from a given corridor.

FIGS. 10A to 10C illustrate the conformance states of an air vehicle with respect to a corridor.

As shown in FIGS. 10A to 10C, the corridor having the volumetric region may be configured as a prism generated in the three-dimensional space around the segment connecting fix 1 and fix 2.

The monitoring device 200 may perform conformance monitoring for a planned path by comparing the positional relationship of the air vehicle (e.g., UAM) within the corridor in the form of a prism.

The monitoring device 200 may design a safety region and a caution region between the segment and the side surface of the prism. The safety region may be designed to be relatively close to the segment and wider than the caution region.

According to an embodiment, the monitoring device 200 may configure the prism using an inner prism and an outer prism, designate the region of the inner prism as the safety region, and the region of the outer prism other than the inner prism as the caution region.

As shown in FIG. 10A, when the air vehicle travels within the safety region, the monitoring device 200 may determine the conformance of the corresponding corridor as "compliance."

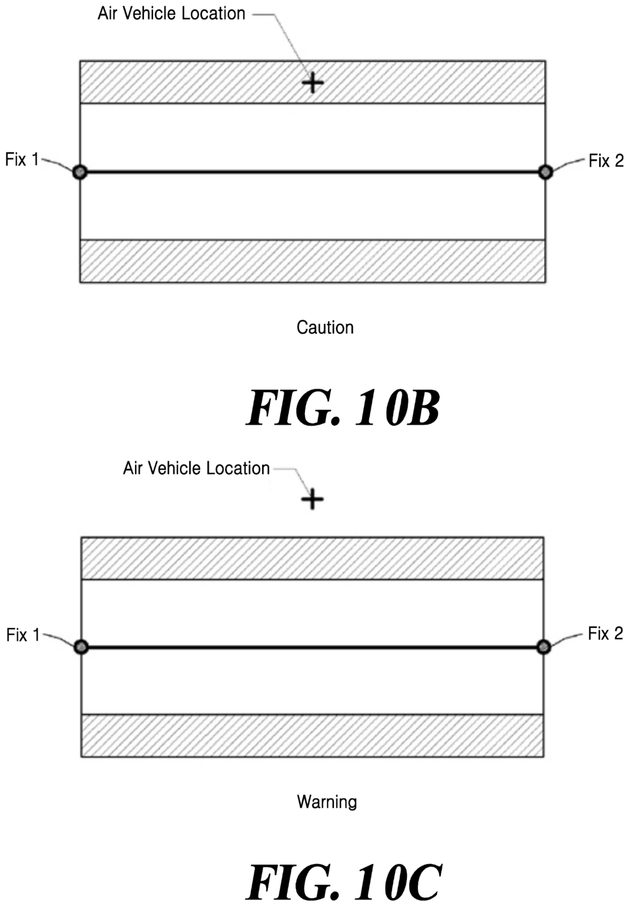

As shown in FIG. 10B, when the air vehicle moves within the caution region after leaving the safety region, the monitoring device 200 may determine the conformance for the corridor as "caution."

As shown in FIG. 10C, when the air vehicle leaves not only the safety region but also the caution region, the monitoring device 200 may determine the conformance for the corridor as "warning."

The monitoring device 200 may perform conformance monitoring in terms of spatial conformance and temporal conformance.

The spatial conformance may refer to checking whether the air vehicle is present in the three-dimensional space according to a planned travel path of the air vehicle.

The temporal conformance may refer to checking whether the air vehicle complies with the expected passing times for key points (e.g., fixes) along the travel path.

The monitoring device 200 may monitor both the spatial conformance and the temporal conformance simultaneously.

The monitoring device 200 may monitor the conformance compliance status by classifying the status into "compliance," "caution," and "warning."

Here, "compliance" may indicate that the air vehicle is moving along a planned path at a planned time, "caution" may indicate that the air vehicle is likely to deviate from the planned path or time, and "warning" may indicate that the air vehicle has deviated from the planned path or time.

The monitoring device 200 may provide the conformance compliance status such as "compliance," "caution," and "warning" separately for each of the spatial conformance and the temporal conformance.

However, when the conformance compliance status is to be classified into multiple steps, the monitoring device 200 may require corridor width and altitude information relevant to each status.

Also, when classifying the conformance compliance status for the temporal conformance, the monitoring device 200 may require an allowable time range for the expected passing times of key fixes along the path.

The monitoring device 200 may generate the corridor by mutual overlapping of prisms and cylinders.

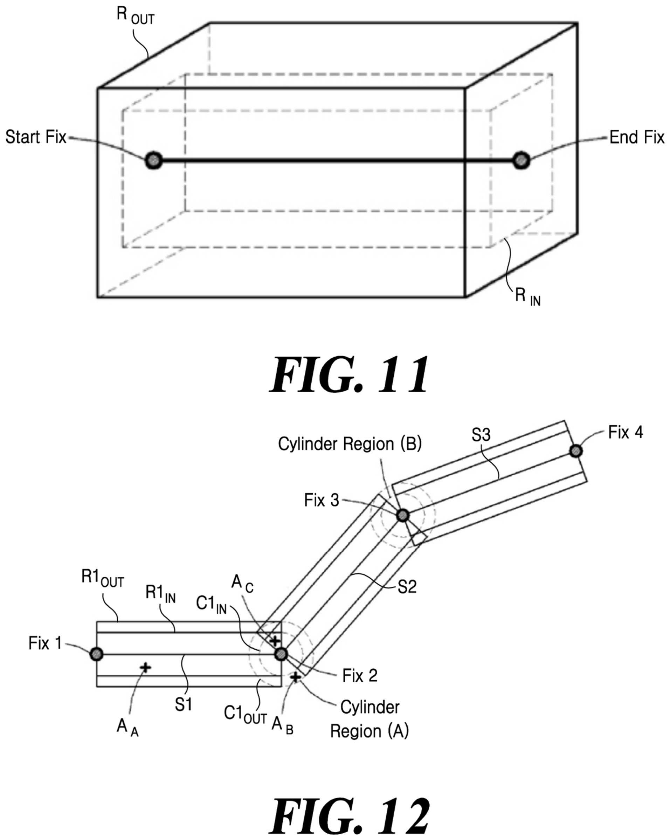

FIG. 11 illustrates generating a volumetric region by mutual overlapping.

As shown in FIG. 11, the monitoring device 200 may generate a volumetric region in the form of a double-structured prism representing a segment connecting a start fix and an end fix by overlapping an inner prism $R_{IN}$ and an outer prism $R_{OUT}$ having a larger volume than the inner prism $R_{IN}$.

The monitoring device 200 may generate the prism within a partition by overlapping the outer prism $R_{OUT}$ and the inner prism $R_{IN}$.

At this time, the monitoring device 200 may configure the partition such that the outer prism $R_{OUT}$ completely contains the inner prism $R_{IN}$.

FIG. 12 illustrates the location of an air vehicle on a travel path.

As shown in FIG. 12, the air vehicle travel path may be configured as a corridor formed by overlapping two volumetric regions for each segment connecting neighboring fixes.

The prism generated in first segment S1 between fix 1 and fix 2 has double volumetric regions consisting of an inner prism $R1_{IN}$ and an outer prism $R1_{OUT}$. As it is determined that the air vehicle location $A_A$ is close to segment S1, in other words, within the inner prism $R1_{IN}$, the monitoring device 200 may determine the conformance compliance status of the spatial conformance as "compliance."

The cylinder generated at fix 2 has double volumetric regions consisting of an inner cylinder $C1_{IN}$ and an outer cylinder $C1_{OUT}$. As it is determined that the air vehicle location $A_B$ is offset from the center of the cylinder, in other words, within the outer cylinder $C1_{OUT}$, the monitoring device 200 may determine the conformance compliance status of the spatial conformance as "caution."

When it is determined that the air vehicle location $A_C$ is located simultaneously within the inner prism $R1_{IN}$ and the inner cylinder $C1_{IN}$, the monitoring device 200 may determine the conformance compliance status of the spatial conformance as "compliance."

Once the spatial conformance is determined, the monitoring device 200 may check the temporal conformance for the cylinder and the prism.

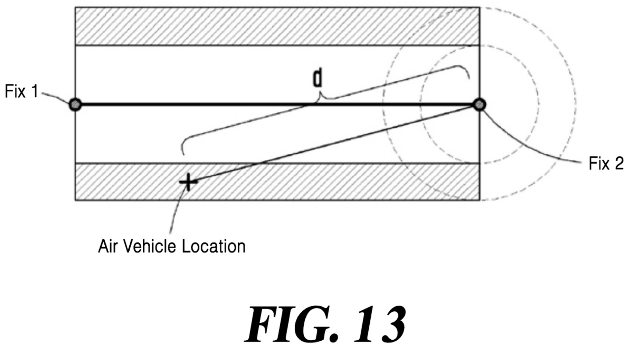

FIG. 13 illustrates checking of temporal conformance.

In checking the temporal conformance of the prism, if the spatial conformance is determined as "compliance" or "caution," the monitoring device 200 may calculate the distance $d$ between the two points by using the two-dimensional position information (e.g., latitude/longitude) of the air vehicle and the two-dimensional position information (e.g., latitude/longitude) of fix 2 located in the travel direction of the air vehicle.

The time $t_{fastest}$, which is the shortest possible time for the air vehicle to arrive at fix 2, may be calculated using Eq. 17 described above.

The monitoring device 200 may apply $t_{fastest}$ to Eq. 18 described above to determine the temporal conformance.

If $t_{fastest}$ is smaller than $ETO$ - $\Delta t_{tolerance}$ and satisfies Eq. 18, the monitoring device 200 may determine that the air vehicle does not satisfy the temporal conformance.

Eqs. 19 and 20 may be formulas for checking the temporal conformance when the conformance compliance status is classified into three steps of "compliance," "caution," and "warning."

[Eq. 19]

$$t_{fastest} < ETO - \Delta t_{tolerance,coution}$$

[Eq. 20]

$$t_{fastest} < ETO - \Delta t_{tolerance,abert}$$

The monitoring device 200 may determine the temporal conformance as "warning" for an air vehicle that does not satisfy Eq. 20, as "caution" for an air vehicle that satisfies Eq. 20 but does not satisfy Eq. 19, and as "compliance" for an air vehicle that satisfies Eq. 19.

When information such as $\Delta t_{tolerance}$ is not provided, $\Delta t_{tolerance}$ may be determined by dividing the radius of the cylinder by the minimum cruising speed $v_{min}$ of the air vehicle.

In checking temporal conformance of the cylinder, since the air vehicle may perform a fly-by of a fix in addition to a fly-over of the fix within the cylinder, it is difficult for the monitoring device 200 to clearly determine whether the air vehicle has actually passed the fix or has not yet passed it.

Accordingly, regarding the temporal conformance monitoring of the cylinder, the monitoring device 200 may directly apply the spatial conformance. In other words, if the spatial conformance is determined as "compliance," the temporal conformance may also be determined as "compliance," and if the spatial conformance is determined as "caution," the temporal conformance may also be determined as "caution."

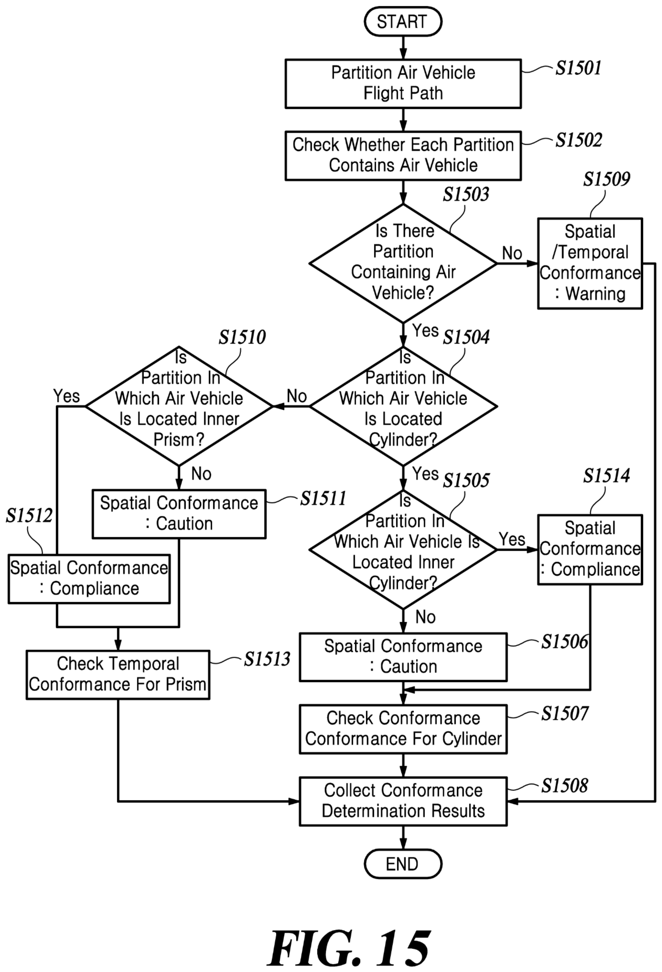

Hereafter, with reference to FIG. 14 and/or FIG. 15, processing steps of the monitoring device 200 according to the embodiments of the present disclosure will be described in detail.

FIG. 14 is a flow diagram illustrating partitioning of a corridor into segments and generation of a volumetric region for each segment according to one embodiment of the present disclosure.

In the S1401 step, the monitoring device 200 may identify the start fix and the end fix of a segment within a corridor.

In the S1402 step, the monitoring device 200 may determine whether the latitudes/longitudes of the start fix and the end fix of the segment are identical.

If the latitudes/longitudes of the start fix and the end fix are not identical (NO in the S1402 step), the monitoring device 200 may proceed to the S1403 step and determine whether the altitudes of the start fix and the end fix are identical.

If the altitudes are not identical (NO in the S1403 step), the monitoring device 200 may proceed to the S1409 step to be described later.

On the other hand, if the altitudes are identical (YES in the S1403 step), the monitoring device 200 may proceed to the S1404 step and determine whether the end fix of the segment is the last fix of the corridor.

If the end fix is the last fix of the corridor (YES in the S1404 step), the monitoring device 200 may proceed to the S1408 step to be described later.

On the other hand, if the end fix is not the last fix of the corridor (NO in the S1404 step), the monitoring device 200 may proceed to the S1405 step and compute the internal angle among three fixes (e.g., the start fix and the end fix of the segment, and the fix located next to the end fix of the segment).

In the S1406 step, the monitoring device 200 may determine whether the internal angle is within a given range (e.g., $0° \pm \alpha$).

If the internal angle is within the given range (YES in the S1406 step), the monitoring device 200 may proceed to the S1408 step to be described later.

Meanwhile, if the internal angle is not within the given range (NO in the S1406 step), the monitoring device 200 may proceed to the S1407 step and generate a cylinder based on the end fix of the segment (e.g., the second cylinder in FIG. 6C).

In the S1408 step, the monitoring device 200 may generate a prism using information on the start fix of the segment, the end fix of the segment, and the corridor width.

In the S1409 step, the monitoring device 200 may determine whether the second fix between two consecutive fixes (e.g., the end fix) is the last fix of the corridor.

If the second fix is the last fix (YES in the S1409 step), the monitoring device 200 may terminate the processing.

If the second fix is not the last fix (NO in the S1409 step), the monitoring device 200 may return to the S1401 step and process the next adjacent segment.

If the latitudes/longitudes of the start fix and the end fix of the segment are identical (YES in the S1402 step), the monitoring device 200 may proceed to the S1410 step and determine whether the altitudes of the start fix and the end fix are identical.

If the altitudes are identical (YES in the S1410 step), the monitoring device 200 may proceed to the S1409 step and determine whether the second fix between two consecutive fixes (e.g., the end fix) is the last fix of the corridor.

If the altitudes are not identical (NO in the S1410 step), the monitoring device 200 may proceed to the S1411 step and generate a cylinder based on the start fix and the end fix of the segment (e.g., the first cylinder in FIG. 6B).

FIG. 15 is a flow diagram of conformance monitoring according to one embodiment of the present disclosure.

In the S1501 step, the monitoring device 200 may partition the air vehicle travel path.

The air vehicle travel path may be configured as a corridor in which volumetric regions in the form of prisms and cylinders are generated around the three-dimensional space of segments connecting neighboring fixes.

The monitoring device 200 may partition the air vehicle travel path in units of segment.

Accordingly, each partition may be configured to include a segment, a fixes connected by segments (a start fix and an end fix), and a prism and a cylinder formed along the segment and around the fixes. For example, the monitoring device 200 may partition the air vehicle travel path based on the processing flow described in FIG. 14.

In the S1502 step, the monitoring device 200 may check whether an air vehicle is included in each partition.

For the prisms and cylinders within a partition, the monitoring device 200 may check whether an air vehicle is located within a particular prism and/or cylinder using the location information of the air vehicle (e.g., latitude, longitude, altitude).

In checking whether the air vehicle is located within a particular prism, the monitoring device 200 may first determine, for the two-dimensional planar figure of the prism (i.e., a rectangle), whether the two-dimensional location of the air vehicle (e.g., latitude/longitude) is located within the two-dimensional planar figure.

As a means of determination, the monitoring device 200 may use algorithms such as Ray Casting and the Winding Number.

If it is determined, based on the two-dimensional criterion, that the air vehicle is within the two-dimensional planar figure of the particular prism (i.e., a rectangle), the monitoring device 200 may determine whether the altitude of the air vehicle is within the upper and lower altitude limits of the prism; if the air vehicle's altitude is within that range, it is finally determined that the air vehicle is within the prism.

In checking whether the air vehicle is located within a particular cylinder, the monitoring device 200 may first determine, for the two-dimensional planar figure of the cylinder (i.e., a circle), whether the two-dimensional location of the air vehicle (e.g., latitude/longitude) is within the two-dimensional planar figure.

The monitoring device 200 may calculate the two-dimensional distance between the origin of the cylinder and the location of the air vehicle, and if the distance is less than or equal to the radius of the circle, may determine that the air vehicle is within the two-dimensional planar figure of the cylinder.

If it is determined, based on the two-dimensional criterion, that the air vehicle is within the two-dimensional planar figure of a particular cylinder (i.e., a circle), the monitoring device 200 may determine whether the altitude of the air vehicle is within the upper and lower altitude limits of the cylinder; if it is determined that the air vehicle's altitude is within that range, it is finally determined that the air vehicle is within the cylinder.

In the S1503 step, the monitoring device 200 may determine whether there exists a partition that contains the air vehicle.

The monitoring device 200 may determine whether there exists at least one cylinder and/or prism in which the air vehicle is located.

If there is a partition in which the air vehicle is located (YES in the S1503 step), the monitoring device 200 may proceed to the S1504 step and determine whether the partition in which the air vehicle is located includes a cylinder.

Depending on whether the latitudes/longitudes or the altitudes of the start fix and the end fix of the segment are identical, the partition may include only a prism (Case A), only a cylinder (Case B), or include a prism and a cylinder simultaneously (Case C).

The monitoring device 200 may determine whether the air vehicle is located in the cylinder of Case B or in the cylinder of Case C.

For example, if the air vehicle travel path has a first prism and a first cylinder associated with partition 1 and then continues to a second prism and a second cylinder associated with section 2, the air vehicle may not be present in the first cylinder and the second cylinder simultaneously.

Accordingly, by determining whether the partition in which the air vehicle is located includes a cylinder, the monitoring device 200 may identify whether the air vehicle is located within cylinder 1 of partition 1 or cylinder 2 of partition 2.

If the partition in which the air vehicle is located includes a cylinder (YES in the S1504 step), the monitoring device 200 may proceed to the S1505 step to determine whether the air vehicle is located in the inner cylinder.

After identifying in the preceding step S1504 which cylinder the air vehicle is located in, the monitoring device 200 may determine whether the air vehicle is located in the inner cylinder or the outer cylinder constituting the cylinder.

If the cylinder in which the air vehicle is located is not the inner cylinder (NO in the S1505 step), the monitoring device 200 may proceed to the S1506 step to determine the conformance compliance status of the spatial conformance as "caution."

Since the air vehicle is identified as being located in the outer cylinder rather than the inner cylinder, the monitoring device 200 may determine the spatial conformance as "caution," as the air vehicle is in the caution region.

In the S1507 step, the monitoring device 200 may check the temporal conformance for the cylinder.

In the S1508 step, the monitoring device 200 may collect the conformance results.

Meanwhile, if the air vehicle is located in none of the partitions (NO in the S1503 step), the monitoring device 200 may proceed to the S1509 step to determine both the spatial conformance and the temporal conformance compliance status as "warning."

If the air vehicle is located in neither a cylinder nor a prism, the monitoring device 200 may determine that the air vehicle has completely deviated from the planned travel path, determine the spatial conformance as "warning," and also determine the temporal conformance as "warning."

Afterward, the monitoring device 200 may proceed to the S1508 step.

If the partition in which the air vehicle is located is not a cylinder (NO in the S1504 step), the monitoring device 200 may proceed to the S1510 step to determine whether the prism in which the air vehicle is located is the inner prism.

If the air vehicle is located in one of the partitions on a planned travel path but not in a cylinder, the monitoring device 200 may identify the air vehicle as being located in a prism.

Once the air vehicle is identified as being located in a prism, the monitoring device 200 may determine whether the air vehicle is located in the inner prism or the outer prism constituting the prism.

If the prism in which the air vehicle is located is not the inner prism (NO in the S1510 step), then in the S1511 step, the monitoring device 200 may determine the conformance compliance status of the spatial conformance as "caution."

Since the air vehicle is identified as being located in the outer prism rather than the inner prism, the monitoring device 200 may determine the spatial conformance as "caution," as the air vehicle is in the caution region.

If the prism in which the air vehicle is located is the inner prism (YES in the S1510 step), then in the S1512 step, the monitoring device 200 may determine the conformance compliance status of the spatial conformance as "compliance."

Afterward, in the S1513 step, the monitoring device 200 may check the temporal conformance for the prism and proceed to the S1508 step.

If the cylinder in which the air vehicle is located is the inner cylinder (YES in the S1505 step), the monitoring device 200 may proceed to the S1514 step to determine the conformance compliance status of the spatial conformance as "compliance."

Since the air vehicle is identified as being located in the inner cylinder, the monitoring device 200 may determine the spatial conformance as "compliance," as the air vehicle is in the safety region.

Afterward, the monitoring device 200 may proceed to the S1507 step to check the temporal conformance for the cylinder and then proceed to the S1508 step.

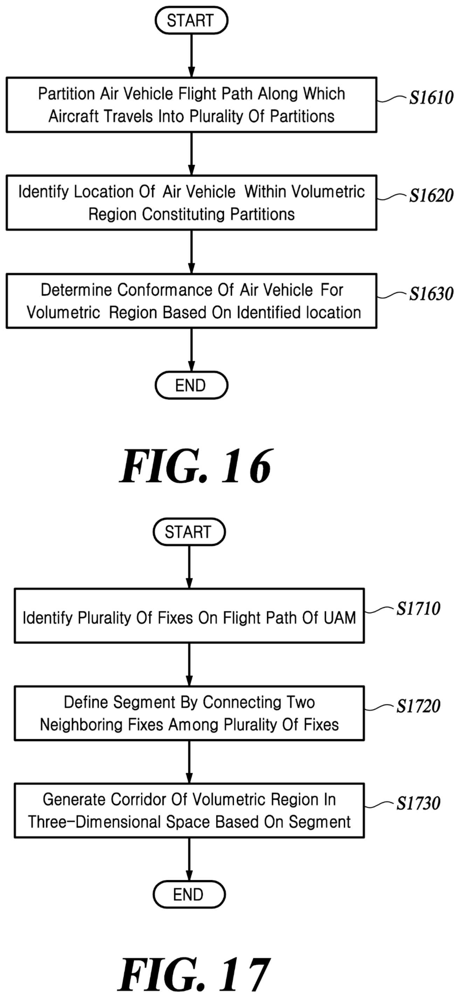

In what follows, with reference to FIG. 16, processing steps of monitoring conformance of a transportation means according to various embodiments of the present disclosure will be described in detail.

FIG. 16 is a flow diagram illustrating a method for monitoring conformance of a transportation means within a multi-waypoint-based three-dimensional corridor according to one embodiment of the present disclosure.

The method illustrated in FIG. 16 may be performed by the monitoring device 200 described above or by an electronic device structurally or functionally including at least part of constituting elements of the monitoring device 200. In what follows, it is assumed that the method illustrated in FIG. 16 is performed by the electronic device.

In the S1610 step, the electronic device may partition the air vehicle travel path along which the air vehicle travels into a plurality of partitions. The S1610 step may be a processing step of partitioning the air vehicle travel path along which the air vehicle flies into segments and classifying each segment as a separate partition.

The air vehicle travel path may include fixes, which serve as inflection points where an air vehicle such as a UAM changes its latitude, longitude, or altitude in the horizontal or vertical direction; segments, which connect neighboring fixes by designating one as a start fix and the other as an end fix; and volumetric regions in the form of prisms and cylinders generated based on the segments.

By partitioning the air vehicle travel path in segment units, the electronic device may allow the classified partitions to include prisms and cylinders generated in association with the start and end fixes of each segment.

In the S1620 step, the electronic device may identify the location of the air vehicle within the volumetric region constituting the partition. The S1620 step may be a processing step of specifying the location of the air vehicle flying within a volumetric region in the form of a prism or a cylinder.

In the S1630 step, the electronic device may determine the conformance of the air vehicle for the volumetric region based on the identified location. The S1630 step may be a processing step of determining whether the point within the volumetric region in which the air vehicle is flying is spatially and temporally suitable.

For the determination of conformance, each of the prisms and cylinders forming the volumetric region may be designed as a structure obtained by overlapping n pillars.

Here, the number n of overlapping pillars may be determined according to the number of levels for determining conformance.

For example, when conformance is classified into three levels of "compliance," "caution," and "warning," the number n of overlapping pillars may be set to 2.

When n is set to 2, two prisms may be overlapped, and the electronic device may configure the two prisms as an inner prism and an outer prism having a larger volume than the inner prism.

The electronic device may define the region occupied by the inner prism as a safety region corresponding to "compliance" conformance, the region between the inner prism and the outer prism as a caution region corresponding to "caution" conformance, and the outer region of the outer prism as a warning region corresponding to "warning" conformance.

Similarly, when n is 2, the cylinder may be configured by overlapping an inner cylinder and an outer cylinder having a larger volume than the inner cylinder.

The electronic device may define the region occupied by the inner cylinder as a safety region related to conformance "compliance," the region between the inner cylinder and the outer cylinder as a caution region related to conformance "caution," and the region outside the outer cylinder as a warning region related to conformance "warning."

A partition may be configured to include a plurality of segments, start fixes and end fixes connected through the segments, and the volumetric regions formed in the form of prism and cylinder at the segments and the end fixes.

In an environment where the partition is configured as a combination of a prism and a cylinder, the electronic device may determine the spatial conformance according to the location of the air vehicle within the prism or the cylinder.

In determining the spatial conformance, it may be determined as to whether the volumetric region in which the air vehicle is located is a cylinder or a prism. In other words, the electronic device may determine whether the air vehicle is located in a corridor in the form of a prism generated based on a segment or in a cylindrical corridor generated based on an end fix of the segment.

If it is determined that the volumetric region in which the air vehicle is located is a cylinder, the electronic device may determine whether the cylinder in which the air vehicle is located is the inner cylinder. In other words, the electronic device may determine whether the location of the air vehicle is within the inner cylinder, which is the safety region.

If it is determined that the cylinder in which the air vehicle is located is not the inner cylinder, it may be confirmed that the air vehicle is located in the outer cylinder defining the caution region and may evaluate the spatial conformance as "caution." In other words, the electronic device may determine the spatial conformance for the air vehicle as "caution" as it is confirmed that the air vehicle is located in a region between the inner cylinder and the outer cylinder, which is the caution region.

On the other hand, if it is determined that the cylinder in which the air vehicle is located is the inner cylinder, the electronic device may confirm that the air vehicle is located in the inner cylinder defining the safety region and may evaluate the spatial conformance as "compliance." In other words, the electronic device may determine the spatial conformance for the air vehicle as "compliance" as it is confirmed that the air vehicle is located in the inner cylinder, which is the safety region.

Meanwhile, if it is determined that the volumetric region in which the air vehicle is located is a prism, the electronic device may determine whether the prism in which the air vehicle is located is the inner prism. In other words, the electronic device may determine whether the location of the air vehicle is within the inner prism, which is the safety region.

If it is determined that the prism in which the air vehicle is located is not the inner prism, it may be confirmed that the air vehicle is located in the outer prism defining the caution region and may evaluate the spatial conformance as "caution." In other words, the electronic device may determine the spatial conformance for the air vehicle as "caution" as it is confirmed that the air vehicle is located in a region between the prism cylinder and the outer prism, which is the caution region.

On the other hand, if it is determined that the prism in which the air vehicle is located is the inner prism, the electronic device may confirm that the air vehicle is located in the inner prism defining the safety region and may evaluate the spatial conformance as "compliance." In other words, the electronic device may determine the spatial conformance for the air vehicle as "compliance" as it is confirmed that the air vehicle is located in the inner prism, which is the safety region.

Also, the electronic device may determine whether the air vehicle is located within the volumetric region, and, if it is determined that the air vehicle is not located within the volumetric region, the electronic device may determine both the spatial conformance and the temporal conformance as "warning." In other words, the electronic device may determine both the spatial conformance and the temporal conformance for the air vehicle as "warning" as it is confirmed that the air vehicle is flying outside the volumetric region and is thus located in the warning region.

The electronic device may determine the temporal conformance for the prism or the cylinder after determining the spatial conformance. In other words, immediately after determining the spatial conformance, the electronic device may determine the temporal conformance as to whether the air vehicle's position within the volumetric region is temporally suitable.

To numerically determine the temporal conformance for the prism, the electronic device may be configured to structurally or functionally include the calculation unit 240 shown in FIG. 1.

If the spatial conformance is determined as "compliance" or "caution," the electronic device may apply Eq. 17 to calculate $t_{fastest,}$ which is the shortest possible time in which the air vehicle may arrive at the end fix.

In other words, the electronic device may calculate the time $t_{fastest}$ required for the air vehicle, from its current position within the volumetric region, to reach the end fix of the segment associated with the volumetric region at its maximum capability.

The electronic device may determine the temporal conformance for the prism by checking whether Eq. 18 is satisfied, which compares the calculated $t_{fastest}$ with the time allowed.

In other words, the electronic device may determine that the temporal conformance for the prism is not satisfied if Eq. 18 for $t_{fastest}$ is satisfied.

If $t_{fastest}$ is smaller than the difference between $ETO$ and $At_{tolerance,}$ and the air vehicle fails to reach the end fix at the expected time scheduled in a flight plan even at its maximum capability, the electronic device may determine that temporal conformance for the prism is not satisfied.

In determining temporal conformance in the cylinder, the electronic device may determine the temporal conformance for the cylinder in the same manner as the spatial conformance. This is because, since the air vehicle may perform a fly-by of a fix in addition to a fly-over of the fix within the cylinder, it is difficult to clearly determine whether the air vehicle has actually passed over the fix or has not yet passed it.

In other words, regarding the temporal conformance of the cylinder, the electronic device may directly apply the spatial conformance. For example, if the spatial conformance is determined as "compliance," the electronic device may also determine the temporal conformance of the cylinder as "compliance,"; if the spatial conformance is determined as "caution," the electronic device may also determine the temporal conformance of the cylinder as "caution."

As described above, according to the present disclosure, the spatial conformance, which relates to the location of the air vehicle flying within the corridor of three-dimensional space, and the temporal conformance, which relates to whether the air vehicle is located at a specific point within the corridor at a planned time, may be accurately determined.

Also, according to the present disclosure, whether the air vehicle is moving without deviation from a given corridor may be easily and quickly recognized in both the spatial and temporal domains.

In what follows, with reference to FIG. 17, processing steps of generating a three-dimensional corridor according to various embodiments of the present disclosure will be described in detail.

FIG. 17 is a flow diagram illustrating a method for generating a three-dimensional corridor using multiple waypoints according to one embodiment of the present disclosure.

The method illustrated in FIG. 17 may be performed by an electronic device structurally or functionally including the monitoring device 200, the partitioning unit 210, and/or at least part of constituting elements thereof. In what follows, it is assumed that the method illustrated in FIG. 17 is performed by the electronic device.

In the S1710 step, the electronic device identifies a plurality of fixes on the travel path of the UAM. The S1710 step may be a processing step of designating, as fixes, inflection points at which the UAM changes its travel direction on the travel path along which the UAM flies.

Here, a fix may be specified as an inflection point at which the UAM changes its latitude and longitude or altitude to fly horizontally, vertically, or diagonally.

In the S1020 step, the electronic device defines a segment by connecting two neighboring fixes among the plurality of fixes. The S1020 step may be a processing step of connecting a pair of consecutive fixes, specified in the movement direction of the UAM, using a straight-line segment.

In the S1730 step, the electronic device generates a corridor of a volumetric region in a three-dimensional space based on the segment. The S1730 step may be a processing step of designing a three-dimensional corridor around the segment, within which the UAM flies safely.

In generating the corridor, the electronic device may generate a corridor in the form of a prism or a cylinder around the segment by considering the latitudes, longitudes, and altitudes of the fixes.

To this end, the electronic device may identify a start fix and an end fix of each individual segment according to the movement direction of the UAM along the travel path. In other words, the electronic device may identify, for each segment, the start fix at which the segment begins and the end fix at which the segment ends.

For example, when a first segment and an adjacent second segment are generated along the travel path, the electronic device may identify a first start fix and a first end fix for the first segment, and a second start fix and a second end fix for the second segment along the movement direction of the UAM.

The electronic device may generate a three-dimensional corridor in the form of a prism, a cylinder, or a combination of the prism and the cylinder by taking into account the latitudes, longitudes, or altitudes of the start fix and the end fix.

For example, the electronic device may generate only a prism when the latitudes and longitudes of the start fix and the end fix differ while their altitudes are the same.

As another example, when the latitudes and longitudes of the start fix and the end fix are identical but the altitudes are different, the electronic device may generate only a cylinder (hereinafter referred to as a first cylinder).

As yet another example, when the internal angle between neighboring segments is sufficiently large, the electronic device may generate a cylinder (hereinafter referred to as a second cylinder) connecting them together with a prism generated in association with each segment.

Specifically, when the latitudes and longitudes of the start fix and the end fix are different but the altitudes are the same, the electronic device may generate a prism between the start fix and the end fix. In other words, when the positions of the start fix and the end fix of the segment are specified as different coordinates at the same altitude, the electronic device may generate a corridor in the form of a prism as a volumetric region between the start fix and the end fix.

In generating the prism, the electronic device may determine the width of the prism as the length of the segment, determine the depth of the prism as a predefined corridor width, and determine the height of the prism as the difference between the upper altitude limit and the lower altitude limit of the start fix or the end fix.

Here, the corridor width may be set as a safety margin for a UAM flying in the horizontal direction, and the upper altitude limit and lower altitude limit may be set as a vertical safety margin for a UAM flying in the vertical direction. The corridor width, upper altitude limit, and lower altitude limit may be set flexibly in consideration of the operator's experience and the performance of the UAM.

For example, when the latitudes and longitudes of a first start fix and a first end fix are different but their altitudes are the same, the electronic device may generate a corridor in the form of a prism between the first start fix and the first end fix, where the segment length, the corridor width, and the difference between the upper altitude limit and the lower altitude limit correspond to the width, depth, and height of the prism, respectively.

Meanwhile, when the latitudes and longitudes of the start fix and the end fix are the same but their altitudes are different, the electronic device may generate a first cylinder between the start fix and the end fix. In other words, when the positions of the start fix and the end fix of the segment are specified to be at the same coordinates but at different altitudes, the electronic device may generate a corridor having the first cylinder as a volumetric region between the start fix and the end fix.

In generating the first cylinder, the electronic device may determine the diameter of the first cylinder based on the defined corridor width and determine the height of the first cylinder based on the length of the segment.

For example, when the latitudes and longitudes of the first start fix and the first end fix are the same but their altitudes are different, the electronic device may generate a corridor having the first cylinder between the first start fix and the first end fix, where the corridor width and the segment length correspond to the diameter and the height of the first cylinder, respectively.

According to the embodiment, depending on whether prisms overlap, the electronic device may generate a corridor of a second cylinder connecting the prisms.

To this end, the electronic device may calculate the internal angle between a first segment and a second segment that are adjacent to each other as the prisms are generated. In other words, the electronic device may measure the angle formed on the inside between the first segment and the second segment.

In the above example in which a first start fix and a first end fix are identified for the first segment and a second start fix and a second end fix are identified for the second segment, the electronic device may calculate the internal angle formed by the first start fix, the first end fix, and the second start fix.

Subsequently, when the calculated internal angle is within "$0° \pm \alpha$", the electronic device may determine that the prism generated corresponding to the first segment and the prism generated corresponding to the second segment completely overlap and remove the generated prism corresponding to the second segment. In other words, when the internal angle between the adjacent segments is calculated to be sufficiently small, the electronic device may determine that the prisms generated from the respective segments overlap each other and remove one of the prisms to generate a corridor.

Here, "$\alpha$" is the minimum value of the internal angle, based on which it may be determined that prisms do not completely overlap with each other, and may be flexibly set by the operator through experiments and experience.

For example, if the internal angle formed by the first start fix and the first end fix of the first segment and the second start fix of the second segment is sufficiently small, the electronic device may determine that the first and second segments are completely overlapped and remove the prism of the second segment.

On the other hand, when the internal angle is not within "$0° \pm \alpha$," the electronic device may determine that the prism generated corresponding to the first segment and the prism generated corresponding to the second segment are not completely overlapped and may generate a second cylinder based on the first end fix of the first segment. In other words, when the internal angle between the adjacent segments is calculated to be sufficiently large, the electronic device may determine that the prisms generated from the respective segments do not overlap each other and may generate a second cylinder such that another prism is generated next to one prism and connected thereto.

The electronic device may determine the diameter of the second cylinder based on the corridor width and determine the height of the second cylinder based on the difference between the upper and lower altitude limits of the start fix and the end fix.

For example, if the internal angle formed by the first start fix, the first end fix, and the second start fix is sufficiently large, the electronic device may determine that the first and second segments are not completely overlapped and may generate a second cylinder such that the prism of the second segment is generated next to the prism of the first segment and connected thereto.

Also, the electronic device may connect the prism of the first segment and the prism of the second segment via the second cylinder. In other words, the electronic device may generate a corridor in a three-dimensional space that naturally connects the prisms of adjacent segments by generating a second cylinder between the segments in which the respective prisms are generated.

According to an embodiment, when the end fix of the first segment is the last fix within the travel path, the electronic device may not generate the second cylinder. In other words, when the end fix of the first segment is the last fix on the travel path along which the UAM flies, the electronic device may terminate the generation of a corridor without generating the second cylinder, since no subsequent segment exists.

As described above, according to the present disclosure, a corridor in which the UAM flies may be generated as a volumetric region composed of a combination of prisms and cylinders.

Also, according to the present disclosure, in UAM, a corridor connecting fixes in consideration of frequently changing urban environments, building structures, changes in the positions/shapes of facilities, and unexpected situations such as construction sites may be generated quickly, easily, and adaptively.

Each element of the apparatus or method in accordance with the present invention may be implemented in hardware or software, or a combination of hardware and software. The functions of the respective elements may be implemented in software, and a microprocessor may be implemented to execute the software functions corresponding to the respective elements.

Various embodiments of systems and techniques described herein can be realized with digital electronic circuits, integrated circuits, field programmable gate arrays (FPGAs), application specific integrated circuits (ASICs), computer hardware, firmware, software, and/or combinations thereof. The various embodiments can include implementation with one or more computer programs that are executable on a programmable system. The programmable system includes at least one programmable processor, which may be a special purpose processor or a general purpose processor, coupled to receive and transmit data and instructions from and to a storage system, at least one input device, and at least one output device. Computer programs (also known as programs, software, software applications, or code) include instructions for a programmable processor and are stored in a "computer-readable recording medium."

The computer-readable recording medium may include all types of storage devices on which computer-readable data can be stored. The computer-readable recording medium may be a non-volatile or non-transitory medium such as a read-only memory (ROM), a random access memory (RAM), a compact disc ROM (CD-ROM), magnetic tape, a floppy disk, or an optical data storage device. In addition, the computer-readable recording medium may further include a transitory medium such as a data transmission medium. Furthermore, the computer-readable recording medium may be distributed over computer systems connected through a network, and computer-readable program code can be stored and executed in a distributive manner.

Although operations are illustrated in the flowcharts/timing charts in this specification as being sequentially performed, this is merely an exemplary description of the technical idea of one embodiment of the present disclosure. In other words, those skilled in the art to which one embodiment of the present disclosure belongs may appreciate that various modifications and changes can be made without departing from essential features of an embodiment of the present disclosure, that is, the sequence illustrated in the flowcharts/timing charts can be changed and one or more operations of the operations can be performed in parallel. Thus, flowcharts/timing charts are not limited to the temporal order.

Although exemplary embodiments of the present disclosure have been described for illustrative purposes, those skilled in the art will appreciate that various modifications, additions, and substitutions are possible, without departing from the idea and scope of the claimed invention. Therefore, exemplary embodiments of the present disclosure have been described for the sake of brevity and clarity. The scope of the technical idea of the present embodiments is not limited by the illustrations. Accordingly, one of ordinary skill would understand that the scope of the claimed invention is not to be limited by the above explicitly described embodiments but by the claims and equivalents thereof.

**Claims**

1. A method for monitoring conformance of a transportation means within a multi-waypoint-based three-dimensional corridor, the method comprising:

   partitioning (S1610) an air vehicle travel path along which the air vehicle travels into a plurality of partitions;
   identifying (S1620) the location of the air vehicle in a volumetric region constituting the partitions; and
   determining (S1630) conformance of the air vehicle with respect to the volumetric region according to the identified location.

2. The method of claim 1, wherein the partition is configured as volumetric region including a prism and a cylinder, and

   the determining of the conformance includes:
   determining spatial conformance according to the location of the air vehicle within the prism or the cylinder; and
   determining temporal conformance with respect to the prism or the cylinder after determining the spatial conformance.

3. The method of claim 2, wherein the determining of the conformance further includes:

   determining whether the air vehicle is located with respect to the volumetric region; and
   based on the determination that the air vehicle is not located within the volumetric region, determining both the spatial conformance and the temporal conformance as "warning."

4. The method of claim 2 or 3, wherein the cylinder is configured by overlapping an inner cylinder and an outer cylinder having a larger volume than the inner cylinder, and

   the determining of the spatial conformance includes:
   determining whether the volumetric region in which the air vehicle is located is a cylinder or a prism;
   in response to the determination that the volumetric region in which the air vehicle is located is the cylinder, determining whether the cylinder in which the air vehicle is located is the inner cylinder; and
   in response to the determination that the cylinder in which the air vehicle is located is not the inner cylinder, determining the location of the air vehicle as the outer cylinder defining a caution region and determining the spatial conformance as "caution"; or in response to the determination that the cylinder in which the air vehicle is located is the inner cylinder, determining the location of the air vehicle as the inner cylinder defining a safety region and determining the spatial conformance as "compliance."

5. The method of claim 4, wherein the prism is configured by overlapping an inner prism and an outer prism having a larger volume than the inner prism, and

the determining of the spatial conformance further includes:
in response to the determination that the volumetric region in which the air vehicle is located is the prism, determining whether the prism in which the air vehicle is located is the inner prism; and
in response to the determination that the prism in which the air vehicle is located is not the inner prism, determining the location of the air vehicle as the outer prism defining a caution region and determining the spatial conformance as "caution"; or
in response to the determination that the prism in which the air vehicle is located is the inner prism, determining the location of the air vehicle as the inner prism defining a safety region and determining the spatial conformance as "compliance."

6. The method of any one of claims 2 to 5, further including:

according as the spatial conformance is determined as "compliance" or "caution," applying an equation

$$t_{fastest} = t_c + \frac{d}{v_{max}}$$ to calculate $t_{fastest}$, which is the time at which the air vehicle reaches an end fix related to the prism in the shortest possible time-where $v_{max}$ is the maximum cruising speed of an air vehicle, d is the distance between the air vehicle and the end fix, and $t_c$ is the time at the position where the air vehicle is located-and
wherein the determining of the temporal conformance includes:
based on a satisfaction of an condition $t_{fastest} < ETO - \Delta t_{tolerance}$, determining that the temporal conformance for the prism is not satisfied-where $ETO$ is the Estimated Time Over for a planned fix in a flight plan, and $\Delta t_{tolerance}$ is the allowable time range for the $ETO$.

7. The method of any one of claims 2 to 6, wherein the determining of the temporal conformance includes:
determining the temporal conformance for the cylinder in the same manner as for the spatial conformance.

8. The method of any one of claims 1 to 7, wherein the partitioning the air vehicle travel path into the plurality of partitions includes:

identifying a plurality of fixes within the air vehicle travel path;
defining a segment by connecting two neighboring fixes among the plurality of fixes; and
generating a corridor having the volumetric region in a three-dimensional space based on the segment.

9. The method of claim 8, wherein the generating of the corridor having the volumetric region includes:

identifying a start fix and an end fix of each individual segment according to the movement direction of the air vehicle on the air vehicle travel path; and
generating, as a corridor having the volumetric region, a prism, a cylinder, or a combination of the prism and the cylinder considering latitudes, longitudes, and altitudes of the start fix and the end fix.

10. The method of claim 9, wherein the generating of the corridor having the volumetric region includes:

generating a prism between the start fix and the end fix when the latitudes and longitudes of the start fix and the end fix are different but their altitudes are the same; and
generating a first cylinder between the start fix and the end fix when the latitudes and longitudes of the start fix and the end fix are the same but their altitudes are different.

11. The method of claim 10, wherein the generating of the prism includes:

determining the width of the prism based on the length of the segment;
determining the depth of the prism based on a predetermined corridor width; and
determining the height of the prism based on a difference between an upper altitude limit and a lower altitude limit of the start fix or the end fix, and
the generating of the first cylinder includes:
determining the diameter of the first cylinder based on the predetermined corridor width; and
determining the height of the first cylinder based on the length of the segment.

12. The method of any one of claims 9 to 11, wherein the partitioning the air vehicle travel path into the plurality of partitions further includes:

calculating an internal angle between a first segment and a second segment that are adjacent to each other, and
the generating of the corridor having the volumetric region further includes:
when the calculated internal angle is within "$0° \pm \alpha$," determining that the prism generated corresponding to the first segment and the prism generated corresponding to the second segment completely overlap and removing the generated prism corresponding to the second segment, wherein the $\alpha$ is pre-determined threshold.

13. The method of claim 12, wherein the generating of the corridor having the volumetric region further includes:

when the internal angle is not within "$0° \pm \alpha$," determining that the prism generated corresponding to the first segment and the prism generated corresponding to the second segment do not completely overlap and generating a second cylinder based on the end fix of the first segment; and
connecting the prism of the first segment and the prism of the second segment via the second cylinder.

14. The method of claim 13, wherein the second cylinder is generated only when the end fix of the first segment is not a last fix within the air vehicle travel path.

15. A device (200) for monitoring conformance of a transportation means within a multi-waypoint-based three-dimensional corridor, the device comprising:

a partitioning unit (210) configured to partition an air vehicle travel path along which an air vehicle moves into a plurality of partitions;
an identification unit (220) configured to identify the location of the air vehicle in the volumetric region constituting the partitions; and
a processing unit (230) configured to determine conformance of the air vehicle with respect to the volumetric region based on the identified location.

# FIG. 1

# FIG. 2

**FIG. 3**

**FIG. 4**

27

# FIG. 5

# FIG. 6A

First Cylinder

Difference Between Altitudes Of Two Fixes (h)

Fix 2

Fix 1

Corridor Width (d)

## FIG. 6B

Second Cylinder

Difference Between Altitudes Of Two Altitude Limits (h)

Fix Upper Altitude Limit

Fix 2

Fix Lower Altitude Limit

Corridor Width (d)

## FIG. 6C

**FIG. 7**

**FIG. 8**

**FIG. 9**

Compliance

**FIG. 10A**

Air Vehicle Location

Fix 1

Fix 2

Caution

# *FIG. 10B*

Air Vehicle Location

Fix 1

Fix 2

Warning

# *FIG. 10C*

# FIG. 11

# FIG. 12

**FIG. 13**

**FIG. 14**

**FIG. 15**

START

Partition Air Vehicle Flight Path Along Which
Aircraft Travels Into Plurality Of Partitions —— S1610

Identify Location Of Air Vehicle Within Volumetric
Region Constituting Partitions —— S1620

Determine Conformance Of Air Vehicle For
Volumetric Region Based On Identified location —— S1630

END

# FIG. 16

START

Identify Plurality Of Fixes On Flight Path Of UAM —— S1710

Define Segment By Connecting Two
Neighboring Fixes Among Plurality Of Fixes —— S1720

Generate Corridor Of Volumetric Region In
Three-Dimensional Space Based On Segment —— S1730

END

# FIG. 17

Europäisches
Patentamt

European
Patent Office

Office européen
des brevets

# EUROPEAN SEARCH REPORT

**Application Number**

EP 25 20 9727

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/351904 A1 (ORTLIEB MARKUS [DE]) 2 November 2023 (2023-11-02) * abstract; figures 1, 2 * * paragraphs [0009], [0011], [0013] - [0014], [0017] - [0018], [0021], [0043] * | 1-15 | INV. G08G5/22 G01C21/20 G08G5/26 G08G5/32 G08G5/53 G08G5/55 G08G5/57 G08G5/59 G08G5/72 G08G5/90 |
| X | WO 2024/090818 A1 (SK TELECOM CO LTD [KR]) 2 May 2024 (2024-05-02) * abstract * * paragraphs [0010] - [0012], [0015], [0017], [0023] - [0024] * | 1-15 | |
| X | US 2020/020236 A1 (ZHOU HONGZHU [CN] ET AL) 16 January 2020 (2020-01-16) * abstract; figure 6 * * paragraphs [0113], [0114], [0116], [0123] * | 1-15 | |

**TECHNICAL FIELDS SEARCHED (IPC)**

G08G
G01C

The present search report has been drawn up for all claims

| Place of search | Date of completion of the search | Examiner |
|---|---|---|
| The Hague | 13 February 2026 | Berland, Joachim |

EPO FORM 1503 03.82 (P04C01)

## ANNEX TO THE EUROPEAN SEARCH REPORT
## ON EUROPEAN PATENT APPLICATION NO.

EP 25 20 9727

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2026

| Patent document cited in search report | Publication date | Patent family member(s) | | Publication date |
|---|---|---|---|---|
| US 2023351904 A1 | 02-11-2023 | CN | 116974296 A | 31-10-2023 |
| | | DE | 102022110344 A1 | 02-11-2023 |
| | | EP | 4270363 A1 | 01-11-2023 |
| | | US | 2023351904 A1 | 02-11-2023 |
| WO 2024090818 A1 | 02-05-2024 | CN | 120051818 A | 27-05-2025 |
| | | KR | 20240058434 A | 03-05-2024 |
| | | WO | 2024090818 A1 | 02-05-2024 |
| US 2020020236 A1 | 16-01-2020 | CN | 110088818 A | 02-08-2019 |
| | | US | 2020020236 A1 | 16-01-2020 |
| | | WO | 2018161338 A1 | 13-09-2018 |

EPO FORM P0459

For more details about this annex : see Official Journal of the European Patent Office, No. 12/82